# EUROPEAN PATENT SPECIFICATION

(11) **EP 4 244 115 B1**
(45) Date of publication and mention of the grant of the patent: **08.01.2025**
(21) Application number: 21811428.8
(22) Date of filing: 03.11.2021
(51) Int. Cl.: B61D 17/20

(54) **CARRIAGE CONNECTOR**
WAGENVERBINDER
CONNECTEUR DE VOITURE

(30) Priority: 12.11.2020 GB 202017855
(43) Date of publication of application: 20.09.2023
(73) Proprietor: Kinghorn, John, Brockenhurst Hampshire SO42 7RF (GB)
(72) Inventor: Kinghorn, John, Brockenhurst Hampshire SO42 7RF (GB)
(74) Representative: Cleveland Scott York
(86) International application number: PCT/GB2021/052843
(87) International publication number: WO 2022/101609

(56) References cited:
- EP-A2- 0 167 766
- JP-A- 2011 005 902
- JP-A- H03 153 459

## Description

This invention relates to a carriage connector.

### Background of the invention

Corridor (or gangway) connections, allowing people and items to transfer between adjacent rail vehicles in a train while on the move, have not changed much in design for many years. Typically, a 'bellows' arrangement of an extendible fabric cover is supported by mechanical arrangements allowing for relative movements between the vehicles, or a series of rigid sections are allowed to slide over each other with similar effect. Although improvements have been made over the years, one example being the introduction of highly stretchable materials that are able to partially retain positional stability under a wide range of conditions, and another example being the use of two covers with one cover mounted within the other cover, in general, these arrangements are much the same as those used in the last quarter of the nineteenth century.

Among the problems of these corridor connector designs are noise, generated from the rattling and scraping of integral parts of the connector moving against each other; poor sound insulation, from noise originating from outside the corridor; poor thermal insulation of the connector and draughts, giving lower standards of comfort; and inefficient use of heating and air conditioning systems, resulting in energy wastage.

A further difficulty for higher speed trains using these connectors is the aerodynamic drag introduced by the connection, which is typically much narrower than the vehicle profile. This creates a significant discontinuity in the overall cross section of the train which gives rise to air turbulence, making it more difficult to propel the train. Although at relatively medium speeds the effect of one corridor connection becomes less important, there are typically many corridor connections in a train. Thus, the drag effects induced by the connectors combine, leading to an increased overall energy consumption of the train for traction and/or lower achievable speeds, since overcoming air resistance is the dominant loss of energy once speed of a train has stabilised after acceleration.

Further, a corridor connection that forms part of a train that is subsequently detached, severing the connection from the other train to proceed on its own, can be problematic. This will often be the case in a multiple unit train where sections are combined on busy routes but some parts are detached to serve different areas, or taken out of service when lower capacity is sufficient. The optimal requirements for the corridor connection differ depending on whether the connection is coupled or not. When the connector is not in use, i.e. detached from another railway carriage, a more pointed profile is preferred at the front and rear of the train to reduce aerodynamic drag. Reducing the width of a corridor connection when it is at the end of a train would also be beneficial in reducing the proportion of the driver's view that is obstructed by the connector. In addition, the connector must be suitably robust, for crashworthiness reasons, and close securely, for the safety of passengers inside.

D1 (DE202012013259) relates to a testing device for testing at least one system of a rail vehicle, with a coupling interface which is intended to be coupled to a nose coupling unit of the rail vehicle in order to achieve a coupling of the rail vehicle to be tested with another rail vehicle, and with a test unit connected to the coupling interface, which is intended to at least test at least one property of the system via the nose coupling unit in the coupled state. JPH03153459A describes a retractable gangway for connecting two rail vehicles, whereby the side-walls of the gangway close the opening of the gangway in its retracted state.

The present invention aims to overcome or at least ameliorate one or more of the problems set out above.

### Summary of the invention

In a first aspect of the invention, there is provided a carriage connector for connecting railway carriages together comprising: a pair of wall portions; a floor portion; and a roof portion, wherein the portions form a passage with a first end having an opening and forming a mountable interface, for mounting the carriage connector to a railway carriage, and an opposing end forming a connectable interface; wherein the wall portions are configured to allow their longitudinal length to be varied; wherein the portions are arranged to be retracted to the mountable interface such that the wall portions obstruct the opening, defining a closed position of the carriage connector, and are arranged to be extended from the mountable interface to form the passage, defining an open position of the carriage connector; wherein the carriage connector is movable between the open and closed positions; and wherein, in the closed position, the carriage connector presents a pointed profile for allowing relatively low aerodynamic drag to be induced on the carriage connector when the carriage connector is at an end of the train.

The carriage connector of the present invention has several advantages with respect to conventional carriage connectors. The carriage connector can be retrospectively, and removably, mounted to vehicles on a railway network needing conventional carriage connections, from high speed passenger trains on straight main lines to parcels vans having to negotiate tight curves in cramped depots and sidings. The carriage connector can therefore replace conventional carriage connections to connect railway vehicles together.

The shape of the carriage connector has relatively better aerodynamics for relatively lower energy consumption both when coupled in a train or at the leading or trailing ends of a train, i.e. the open and closed positions respectively, as well as presenting a less restricted view for a driver of train when the carriage connector is closed and mounted to the driver cab end.

The carriage connector of the present invention offers relativity improved heat and sound insulation, as well as giving the complete carriage connector, i.e. a first and second carriage connector connected to one another, the ability to accommodate sharp curves, for universal application, covering all railway routes, both on passenger and freight vehicles as required. Further, the component arrangements of the carriage connector, such as telescopic variation of the longitudinal length of the portions permit a wide range of inter-vehicle coupling distances, allowing the use of both conventional couplers and retractable couplers with different vehicle positioning methods.

An underside of the carriage connector, such as the floor portion, is shaped such that it may accommodate a retractable coupler, which is typically mounted to the underside of a rail vehicle. In this way, a pair of rail vehicles having both retractable couplers and carriage connectors (according the present invention) may couple together via both the carriage connector and the retractable couplers. In other words, the carriage connector is arranged not to interfere with the operation of the retractable coupler. In some cases, the carriage connector may be arranged to operate in tandem with the retractable coupler such that the pair of rail vehicles couple together, first via the retractable couplers, and subsequently via the carriage connectors - the reverse of this sequence would occur when the rail vehicles uncouple from one another.

Preferably, the roof portion is configured to be, in the closed position, retracted within the railway carriage, and in the open position, extended from within the railway carriage to form the passage. In this way, the carriage connector can be stowed when not in use, i.e. not forming a complete carriage connector to connector a first and second railway carriage together, resulting in relatively better aerodynamics for relatively lower energy consumption and presenting a less restricted view for a driver of train.

Preferably, the floor and roof portions are configured to allow their longitudinal length to be varied in accordance with the longitudinal length of the wall portions such that the longitudinal length of the passage can be varied. In this way, variable coupling distances between two carriage connectors can be achieved and the complete carriage connector is able to swivel to accommodate curves on a railway track.

Preferably, each wall portion comprises at least a first section slidably mounted to a second section such that one section may slide relative to the other to allow the longitudinal length of the wall portion to be varied. In this way, when the wall portions are telescopically retracted, the sections of the wall portions occupy a relatively small space allowing an overall relatively more efficient design.

Preferably, the sections are configured such that the sliding movement is constrained in a longitudinal direction of the wall portions. In this way, the wall portions maintain a desirable longitudinal shape.

Preferably, the movement of the carriage connector between the open and closed positions is controlled by an actuation means.

Preferably, the mountable interface is a pivot and, in the open position, the portions, and thus the passage, are arranged to pivot about the mountable interface in a plane which is parallel to the floor portion. In this way, the portions are able to swivel about the mountable interface to allow a complete carriage connector to swivel and accommodate curves when on a railway track.

Preferably, each portion has a mountable end, which forms part of the mountable interface, and a distal end, which forms part of the connectable interface.

Preferably, the wall portions can pivot from a first position, generally parallel to an axial direction of a railway carriage, to a second position, generally perpendicular to an axial direction of a railway carriage, such that distal ends of the wall portions, in the first position, are generally flush closing the opening at the mountable interface, and in the second position, form part of the passage; and wherein the wall portions are moveable between the first and second positions. In this way, the wall portions can act as both doors, in the closed position, closing off a connected railway carriage and as walls, in the open position, preventing passengers within the carriage connector from falling outside the carriage connector.

Preferably, the floor and roof portions are configured not to obstruct the wall portions during movement between the first and second positions. In this way, the wall portions may move freely between the open and closed positions.

Preferably, the actuation means is arranged to control and/or synchronise movement of the wall portions between the first and second positions, and thus controls movement of the carriage connector between the closed and open positions respectively. In this way, the time period between opening and closing the carriage connector, and thus connecting and disconnecting a complete carriage connector, can be optimised, i.e. less time is required to perform these actions.

Preferably, each wall portion has an inner face, facing the passage, and an opposing outer face, and further comprises a planar outer portion having a mountable end, forming part of the mountable interface, and a distal end that is connected to the outer face of the wall portion via a hinging member such that a first void is defined in the space between the wall portion, outer portion and hinging member; and wherein the outer portion is arranged to pivot about the mountable interface in the same plane as the wall portion. In this way, the wall portions can be more securely swivelled, when connected in the open position, and present more secure 'doors', when in the closed position, sealing off the end of a railway carriage.

Preferably, a first angle, defined between the outer portion and the hinging member, and a second angle, defined between the wall portion and hinging member, are arranged to be controlled in tandem via a coupling means. In this way, the movement patterns of the wall portions, i.e. between the open and closed positions and the swivelling movement, can be better controlled.

Preferably, the coupling means couples the movement of the wall portion and outer portion such the first and second angles can be controlled in tandem.

Preferably, the air pressure of the first void is arranged to be varied to allow the stiffness of the wall portion, outer portion and hinging member to be varied.

Preferably, the distal end of the wall portion comprises a connectable structure on the outer face, having a second void, that forms part of the connectable interface, and the air pressure of the second void is arranged to be varied to allow the stiffness of the connectable structure to be varied. In this way, the first and second voids are pressurised to give a desired stability and stiffness of the carriage connector while maintaining sufficient flexibility to accommodate various vehicle movements.

Preferably, a third void is defined between the first and second voids, and the air pressure of the third void is unvaried and exposed to ambient air pressure, or the air pressure of the third void is arranged to be varied. In this way, rapid changes of shape of the carriage connector can be accommodated.

Preferably, in the closed position, the coupling means is arranged to maintain the first and second angle such that the carriage connector has a substantially triangular cross section to facilitate reducing the aerodynamic drag of the carriage connector when it is at the front or rear end of a train.

Preferably, the floor portion is arranged to be mechanically coupled to a coupler of the railway carriage such that the floor portion tracks the horizontal movement of the coupler when the carriage connector is closed. In this way, the floor portions of the two adjacent railway carriages - which are separated from each other when the carriage connectors are closed - can track the curving movements of corresponding coupled railway carriages and are prevented from colliding with each other.

Preferably, the floor portion is arranged to be mechanically uncoupled from the coupler of the railway carriage when the carriage connector is open. In this way, the floor portions and the complete carriage connectors of two fully connected railway carriages may follow their movements independently of the movements of the couplers as required by the vehicles' design and dynamics, and not interfere with each other.

Preferably, the connectable interface of each carriage connector is arranged to connect to one another connecting the passages, and thus the carriage connectors, to form an extended passage, and thus an extended carriage connector. In this way, a first and second carriage connector can be connected to one another to connect together, and form a passage between, a first and second railway carriage.

Preferably, the wall portions, the roof portions and the floor portions of each carriage connector connect to one another to form an interconnected roof and floor, and a first and second interconnected wall. In this way, a first and second carriage connector can be connected to one another to connect together, and form a passage between, a first and second railway carriage.

Preferably, retraction and extension of the roof and floor portions is constrained when the floor and roof portions are interconnected. In this way, interconnected floor and roof portions are maintained during use.

Preferably, in use, the extended carriage connector connects the ends of a first and second railway carriage together and is in a neutral arrangement when the ends of the railway carriages are parallel with respect to one another, and in a swivel arrangement when the ends of the railway carriages are non-parallel with respect to one another, wherein, during the neutral arrangement, the longitudinal length of each wall portion, in an interconnected wall, is the same; and wherein, during the swivel arrangement, the longitudinal length of each wall portion, in an interconnected wall, is arranged to be varied inversely with respect to one another such that the longitudinal length of the extended passage remains constant. In this way, the complete carriage connector can swivel to accommodate curves on a railway track when the complete carriage connector is in use.

Preferably, the portions are further arranged to pivot about the mountable interface in a plane which is perpendicular to the floor portion such that variations in the height of the first and second railway carriage can be accommodated when forming the extended carriage connector.

### Brief Description of the Drawings

Embodiments of the invention will now be described by way of example, with reference to the drawings in which
Figure 1 is a perspective view of the concept of the carriage connector;
Figure 2 is a schematic plan view of a part of the carriage connector;
Figures 3a - 3f are schematic plans showing movement of the wall portions from the open position to the closed position;
Figure 4 is a schematic view of the movements of the wall portions and corresponding movements and angles of the control mechanism of the swivelling means;
Figure 5 is a perspective view of the telescopic arrangement of a wall portion;
Figures 6a and 6b are perspective views of the telescopic extension of a wall portion;
Figure 7 is a schematic cross-sectional view of the sections of the wall portion;
Figure 8 is schematic plan view of the movements of the wall portions from the open position to the closed position and shows swivelling of the carriage connector;
Figure 9 is a schematic plan view of the actuation means of the wall portions;
Figure 10 is a schematic plan view of the upper ceiling panel;
Figure 11 is a schematic plan view of the lower ceiling panel;
Figure 12 is a schematic plan view of the roof cover and turret;
Figure 13 is a schematic cross-sectional view of the side of the roof portion;
Figure 14 is a schematic cross-sectional view of the front of the roof portion;
Figure 15 is a schematic plan view of the floor portion;
Figure 16 is a schematic cross-sectional view through the centre of the floor portion;
Figures 17a and 17b are schematic cross-sectional views of the side the floor portion showing the roller arrangement;
Figure 18 is a perspective view of the sections of the floor portion;
Figure 19 is a perspective view of the sections of a wall portion;
Figure 20 is a perspective view of the front of the closed carriage connector;
Figure 21 is a perspective view of the front of the open carriage connector but telescopically retracted;
Figure 22 is a perspective view of the front of the open carriage connector but telescopically extended;
Figure 23 is a schematic plan view of a first and second carriage connector with a first and second carriage connector, both uncoupled, and coupling a first and second railway carriage together; and
Figure 24 is a schematic plan view of the fabric roller arrangement.

### Detailed Description

An embodiment of the present invention is described below, and would typically be used to provide an interface for the engagement and connection of railway vehicles while providing passage between the vehicles that is, inter alia, reliable and secure.

Conventional carriage connectors are typically mounted to the ends of railway carriages to connect the railway carriages together. These may be in the form of a single carriage connector that connects two railway carriages together, or may be two separate carriage connectors that connect two railway carriages together via a connection between the two carriage connectors. In latter case, these may be integrally mounted as part of the railway carriages. The end of each railway carriage typically has an opening, or 'door', that is dimensioned to allow the passage of passengers within the railway carriage to pass to and from the railway carriage such that, with two railway carriages connected via a railway connector(s), passengers may enter the carriage connector such that they may pass between the railway carriages. The carriage connector 2 is intended to replace these conventional carriage connectors such that a first and second carriage connector 2, connected to a first and second railway carriage, connect the railway carriages together via a connection between the first and second carriage connector 2.

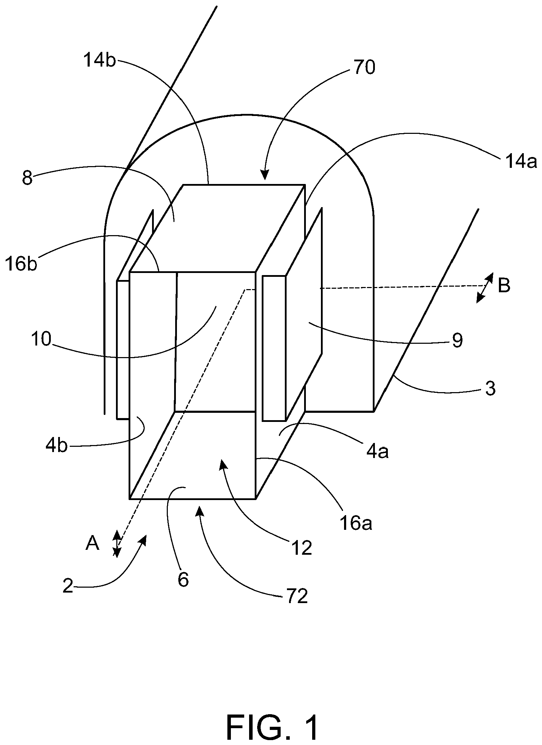

Figure 1 illustrates a basic structure of the carriage connector 2, which comprises a pair of wall portions 4a, 4b, a floor portion 6, a roof portion 8, and a swivel means 9. Generally, the portions 4a, 4b, 6, 8 are arranged to form a chamber 12 that is mounted to the end of a railway carriage 3. The chamber 12 has an opening 10 to allow passengers in the railway carriage 3 to enter and exit the carriage connector 2. The chamber 12 is arranged to swivel about the railway carriage 3, with the swivel means 9 facilitating this movement. The chamber 12 is collapsible such that the opening 10 becomes obstructed preventing passengers from exiting, or entering, the railway carriage 3 via the carriage connector 2. The carriage connector 2 is in an 'open' position when the chamber 12 is formed, and in a 'closed' position when the chamber 12 is collapsed such that the opening 10 is obstructed, and is moveable between the closed and open positions. The specific structure and implementation of these features will now be described.

The wall portions 4a, 4b are substantially planar, each having a mountable end 14a and an opposing distal end 16a (parallel to a vertical axial plane A). The floor and roof portions 6, 8 are also substantially planar, each having a mountable end 14b and an opposing distal end 16b (perpendicular to a vertical axial plane A). Preferably, the mountable ends 14a, 14b of the portions 4a, 4b, 6, 8 are arranged to removably mount the portions 4a, 4b, 6, 8 to the end of a railway carriage 3, which will be described in more detail later on. In other embodiments, the portions 4a, 4b, 6, 8 may be integral parts of the railway carriage 3, rather than be removably mounted to it.

The portions 4a, 4b, 6, 8 are connected to one another such that they form an elongate chamber 12 that is substantially rectangular or square shaped, depending on the axial length of the portions 4a, 4b, 6, 8. The shape of the chamber 12 will reflect the length and shape of the portions 4a, 4b, 6, 8. In some cases, each portion 4a, 4b, 6, 8 may be shaped differently, with respect to each other, such that the chamber 12 is non-symmetrical.

In particular, the wall portions 14a, 14b are parallel with respect to one another and with the plane A, and the floor and roof portions 6, 8 are parallel with respect to one another and perpendicular to the plane A. The two edges of each portion 4a, 4b, 6, 8, i.e. the opposing sides other than the mountable and distal ends, then meet the edges of two other portions generally at right angles. In this way, the edges of the floor and roof portions 6, 8 meet the edges of the wall portions 4a, 4b such that the chamber 12 is formed. In some cases, the edges of the portions may meet at angles other than at right angles.

The chamber 12 has a first end, comprising the mountable ends 14a, 14b, and a second end, comprising the distal ends 16a, 16b, both with openings, as is dictated by the shape of the chamber 12. The opening 10 at the first end of the chamber 12 corresponds to the door provided by the end of the railway carriage 3. Generally, the portions 4a, 4b are arranged to be retracted, or 'swivel inwards', towards the railway carriage 3 such that the opening 10 at the first end of the chamber 12, and thus the door of the railway carriage 3, is obstructed, essentially collapsing the chamber 12, to prevent passengers entering or exiting the railway carriage via the carriage connector 2. The portions 4a, 4b are also arranged, when in the above retracted, or 'closed', position, to be extended, or 'swivel outwards' away, from the railway carriage 3 such that the chamber 12 is formed and the opening 10 is no longer obstructed, 'opening' to the door of the railway carriage 3, allowing passengers to now enter and exit the carriage connector 2, and ultimately, enter and exit the railway carriage 3 via the carriage connector 2. As defined above, the carriage connector 2 is in the open position when the chamber 12 is formed and the opening 10 in not obstructed, and in the closed position when the chamber 12 is collapsed and the opening 10 is obstructed. The movement of the carriage connector 2 between the open and closed positions will be described in detail below.

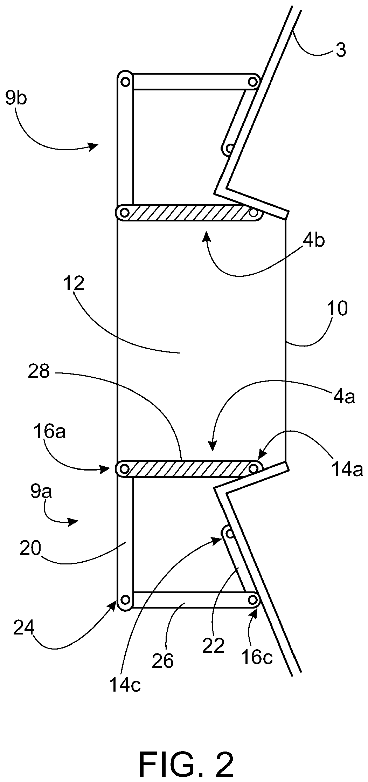

Extension and retraction movements of the wall portions 4a, 4b will now be described. Figure 2 illustrates the wall portions 4a, 4b from a cross-sectional view akin to the cross-sectional plane B of Figure 1. As each wall portion 4a, 4b operates in the same way, along with its corresponding swivel means 9a, 9b, only the movement of one of the wall portions and corresponding swivel means will be described. The wall portion 4a has an inner face, facing the chamber 12, and an outer face, and the mountable end 14a pivotally mounts the wall portion 4a to the railway carriage 3 such that the wall portion 4a may pivot about its mountable end 14a. In this case, the wall portion 4a is mounted such that it is somewhat recessed into the railway carriage 3 to increase its length in operation and thus reduce the angle it must swing to when the vehicles are crossing sharp curves. In other embodiments, this may not be the case.

The swivel means 9a comprises a fixed panel 22 having a mountable end 14c and a distal end 16c. The mountable end 14c pivotally mounts the fixed panel 22 to the railway carriage 3, and the distal end 16c pivotally attaches the fixed panel 22 to the wall portion 4a, proximate the distal end 16a of the wall portion 4a, via a hinging member 24. The hinging member 24 comprises an outer panel 26, pivotally connected to the fixed panel 22, and an inner panel 20, pivotally connected to the wall portion 4a, whereby the outer and inner panels 26, 20 are also pivotally connected to one another. In this way, the wall portion 4a, hinging member 24 and fixed panel 22 are able to substantially move together, whereby the wall portion 4a and fixed panel 22 are able to pivot about their respective mountable ends 14a, 14c, and the outer and inner panels 26, 20 are able to pivot about the fixed panel 22 and wall portion 4a respectively, and with respect to one another.

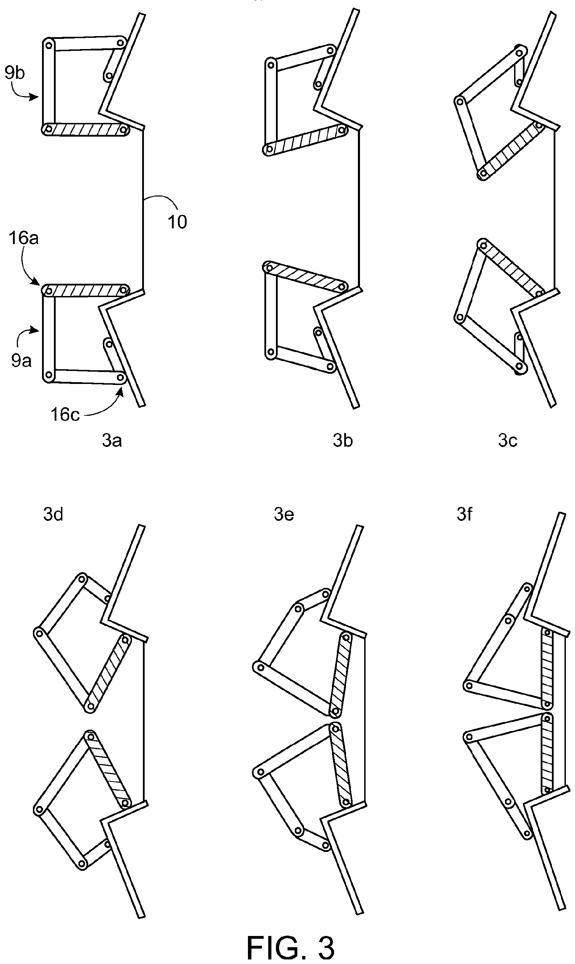

Figure 3 illustrates the extension and retraction, or 'swivelling', concept of the wall portions 4a, 4b, in particular the retraction, or 'progressive closure action', of the wall portions 4a, 4b, from the open position, towards the railway carriage 3. Figures 3a-3f sequentially illustrate the movement of the wall portions 4a, 4b, and the swivel means 9a, 9b, as the distal ends of the wall portions 4a, 4b reach the railway carriage 3. It can be seen that the wall portions 4a, 4b are able to pivot from a first position, generally parallel to an axial direction of a railway carriage (plane A of Figure 1), to a second position, generally perpendicular to an axial direction of a railway carriage, such that distal ends 16a, 16c of the wall portions 4a, 4b, in the first position, are generally flush, closing the opening 10. In this way, the opening 10 at the railway carriage 3, or door, can be closed off when the carriage connector 2 is not in use, i.e. when not coupled to another railway carriage providing passage between the two railway carriages.

Accordingly, the carriage connector 2 is in the open position when the wall portions 4a, 4b are in the first position (Figure 3a) and in the closed position when the wall portions 4a, 4b are in the second position (Figure 3f). The wall portions 4a, 4b are moveable between the first and second positions using an actuation means, which will be described later on.

The wall portions 4a, 4b act as a physical barrier, in the open position, by providing 'walls' to the chamber 12 preventing passengers from inadvertently falling outside of the carriage connector 2, and in the closed position, by providing `closed doors' to the railway carriage 3, closing the opening 10 and preventing passengers from inadvertently falling outside of the railway carriage 3. In the closed position, the inner faces of the wall portions 4a, 4b are presented to passengers within the railway carriage 2 forming the closed doors, forming a seal against heat loss from within the railway carriage 3, noise and/or the weather penetrating the railway carriage 3. The seal also contributes to good crashworthiness of the carriage connector 2.

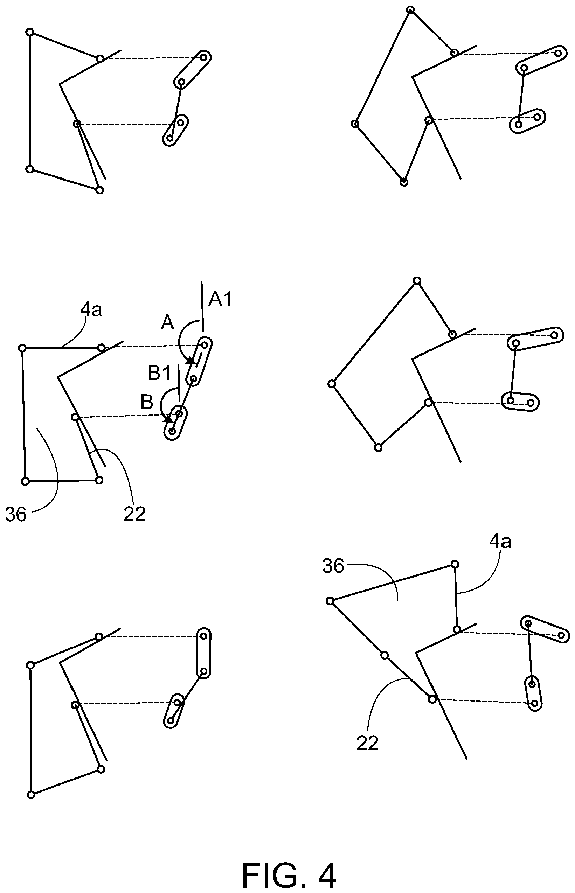

The movement pattern of the swivel means 9a, with respect to the wall portion 4a, is achieved by controlling pivotal angles of the wall portion 4a and fixed panel 22 in tandem using a control mechanism. Figure 4 illustrates the control mechanism, which comprises a first and second crank connected together via a connecting rod. The first crank connects to the wall portion 4a, and the second crank connects to the fixed panel 22, such that movement of the wall portion 4a and fixed panel 22 is coupled together. This control mechanism is performed below the floor portion 6, with the cranks attached to the bottom of their respective parts 22, 4a.

In the open position, the carriage connector 2 is arranged to swivel about the end of the railway carriage 3, along the plane B in Figure 1. In particular, the carriage connector 2 can swivel about its central longitudinal axis such that it pivots either to the left or right of this axis. In the open position, the angle A is offset from the wall portion 4a such that the connecting rod points directly at the second crank pivot. This arrangement ensures that little movement of the second crank occurs under the open position of the carriage connector 2. When the carriage connector 2 is in the closed position, the angle B is such that the connecting rod causes the wall portion 4a to be robustly held in place.

The coupling rod is arranged to change the shape of the carriage connector 2 cross section when pivoting between the open and closed positions to facilitate lower aerodynamic drag in both cases, such that in the open position a wide profile is presented for smoothly attaching to the carriage connector 2 of an adjacent vehicle, and such that in the closed position a narrower more pointed profile is presented when the vehicle may be at an end of the train and not coupled to another vehicle. In particular, in the closed position, the coupling rod maintains the angles A and B such that the carriage connector 2 has a substantially triangular, or convex, cross-section, to facilitate reducing the aerodynamic drag of the carriage connector 2 when in use. In other embodiments, shapes other than a triangular cross-section that allow relatively low aerodynamic drag to be induced on a train by the closed carriage connector 2, when in use, may be used.

Figure 4 illustrates the positions of the wall portion 4a, on the left-hand side, and corresponding positions and angles A, B of the cranks, on the right-hand side. The first angle A corresponds to the angle between the wall portion 4a and line A1, and the second angle B corresponds to the angle between the fixed panel 22 and the line B1.

For simplicity, Figure 4 shows the cranks being as straight arms attached directly to their respective pivot points. In practice, the cranks may have a different shape and can be attached to the panels in different places, as long as the connecting rod attachment points are in the correct angular position, corresponding to angles A & B.

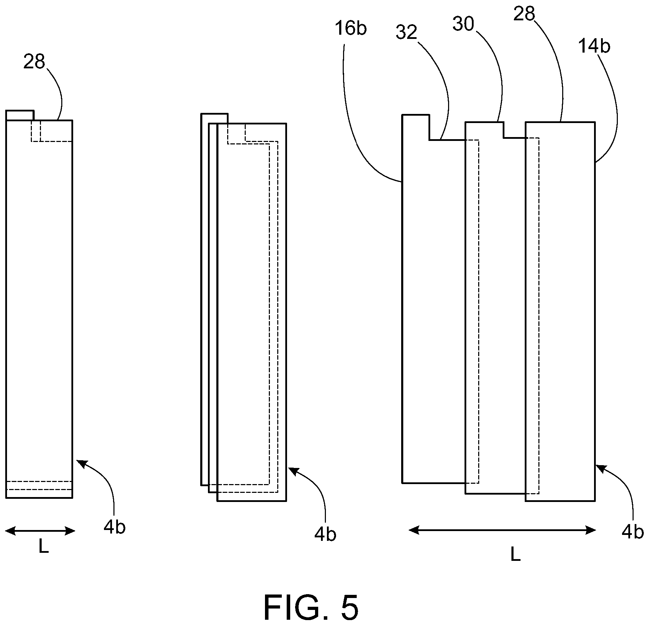

As can be seen in Figure 5, each wall portion 4a, 4b is comprised of three sections 28, 30, 32 that are arranged in telescopic arrangement such that the longitudinal length L of each wall portion 4a, 4b can be varied. An inner section 28 comprises the mountable end 14a, that is mounted to the railway carriage 3, and is connected to an outer section 32, which comprises the distal end 16a, via a middle section 30. The middle and outer sections 30, 32 are arranged to extend from, and retract to, within the inner section 28. In other words, the middle section 30 is slidably mounted to the inner section 28, and the outer section 32 is slidably mounted to the middle section 30 such that the sections may slide relative to one another to allow the longitudinal length of the wall portion to be varied.

In this way, the longitudinal length of the wall portions 4a, 4b, and thus the chamber 12, can be varied from a minimum length, when the inner and outer sections are fully retracted within their respective inner sections, up to a maximum length, when the inner and outer sections are fully extended from within their respective inner sections. Figure 5 illustrates the extension of the fully retracted middle and outer sections 30, 32, the left-hand side of Figure 5, to a fully extended position, the right-hand side of Figure 5.

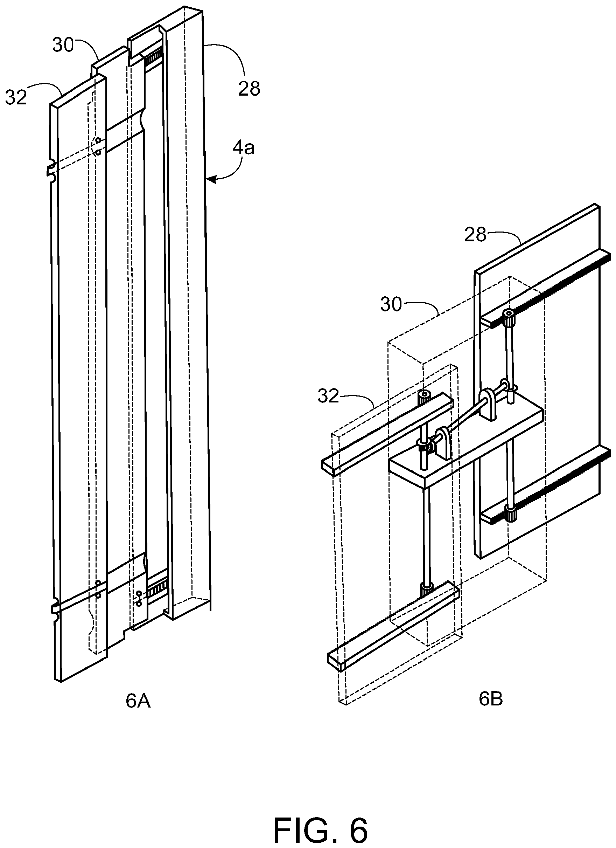

The mechanism allowing the telescopic movement of the wall portions 4a, 4b will now be described and is illustrated by Figure 6. The sections 28, 30, 32 are substantially rectangular and similar in size to one another, as shown in the left-hand side of Figure 6. The inner section 28 has a cavity for receiving the middle and outer sections 30, 32. The middle section 30 is slidably mounted to the inner section 28 via a guide rail and roller arrangement such that it may slide freely to and from within the cavity of the inner section 28. The outer section 32 is also slidably mounted to the middle section 30 with a similar arrangement. The guide rail and roller arrangements allow axial movement of the middle and outer sections 30, 32 to be restricted, ensuring the sections 30, 32 are firmly constrained to move only in the desired directions. In this case, rollers are mounted above and below the guide rails which 'pinch' the guide rails with a defined pressure under spring mounting keeping it in place and preventing the rollers from slipping off the guide rails. In other embodiments, other suitable slidably mounting arrangements may be used to slidably mount the outer section 32 to the middle section 30, and the middle section 30 to the inner section 32.

To allow the middle section 30 to bear significant weight in the extended position, a vertically mounted axle (shown in the right-hand side of Figure 6) is mounted inside the middle section 30 near an end proximate to the inner section 28 having pinions at the top and bottom which are firmly fixed to the axle. These pinions engage with racks mounted in corresponding positions on the inner section 28. This arrangement ensures the middle section 30 does not tilt, axially, when sliding, i.e. the top and bottom of the middle section 30, at the pinions, move the same distance, preventing binding on the guide rails. In other words, sliding movement of the sections relative to one another is constrained in a longitudinal direction of the wall portion using racks mounted near the top and bottom of the middle section 30 which engage with pinions on a common axle such that the top and bottom of the middle section 30 can only move equal distances. The rollers can be proximate to the ends of the inner and middle sections 28, 30, where they meet the ends of the middle and outer sections 30, 32 respectively, to allow only a relatively small overlap between the sections 28, 30, 32.

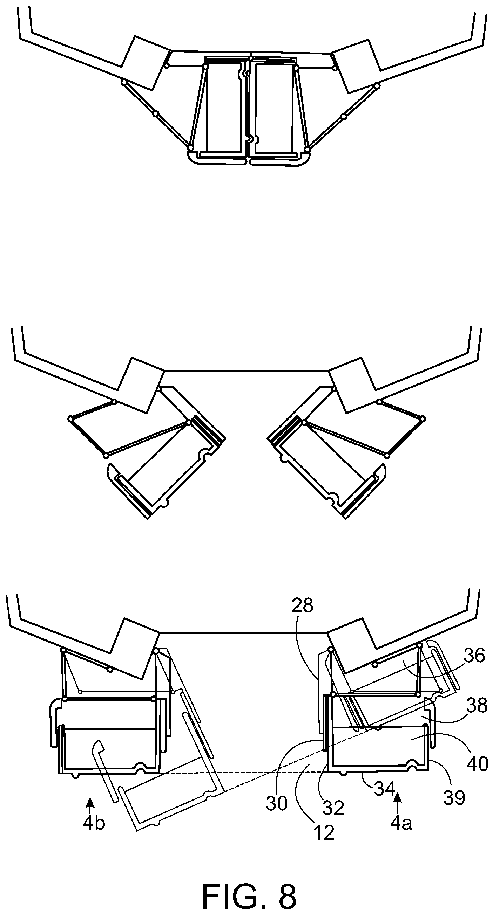

The end of the outer section 32, furthest the middle section 30, bends outwardly, with respect to the chamber 12, to form a connectable end 34 (seen in Figure 8). The connectable end 34 is shaped with an asymmetric groove to allow the connectable end 34 to mate with a corresponding area on a second, opposing, carriage connector.

A similar rack and pinion arrangement is mounted to the opposing side of the middle section 30, proximate to the outer section 32, to allow the outer section 32 to bear significant weight and prevent tilting of the outer section 32 as it slides. The two axles mounted to the middle section 30 are connected together mechanically using pulleys and a toothed belt or by a shaft and bevel gearing arrangement., as shown in the right-hand side of Figure 6. The mechanical coupling is mounted within the space of the middle section 30. This mechanical coupling ensures that both axles must rotate in the same direction by the same amount, and since the racks of the inner section 28 and outer section 32 engage with their respective pinions on opposite sides, they are constrained to move in opposite directions with respect to the middle section 30 by the same amount. The overall result is that the sections 28, 30, 32 have the capability for free movement to any desired amount up to a maximum extension, but have the necessary positional rigidity and robustness to be able to resist impacts and bear the weight of the items attached to them. In addition, the middle section 30 is constrained to move half the distance of the outer section 32, keeping it symmetrically between the inner and outer sections 28, 32. In this way, the sections 28, 30, 32 are mechanically coupled such that the middle and outer sections 30, 32 are able to synchronously extend or retract, with respect to the inner section 28, to effect and allow telescopic movement of the wall portion 4a. This allows the longitudinal length L of each wall portion 4a, 4b to be varied. In other words, mechanically coupling sliding of middle and outer sections allows telescopic movement of the wall portions to be achieved. Note that the diagram on the right-hand side of Figure 6 shows only the general principles of the mechanical coupling arrangement for clarity, and is not to scale. Also in practice the axles are supported nearer the pinions to obtain the desired rigidity of structure, and not just near the centre as shown.

In some embodiments, the wall portions 4a, 4b may comprise more than three sections in a telescopic arrangement. In particular, each wall portion may have more than two slidably mounted sections 30, 32 allowing an increased maximum extension of the wall portions 4a, 4b, and thus increased maximum variable length L of the wall portions 4a, 4b. Having more than two slidably mounted sections may also allow greater overall stability of the wall portions, however, may also increase design complexity and weight of the carriage connector 2.

The extension and retraction of the middle and outer sections from within the inner sections can be controlled, via a telescopic control means, to allow external control of the longitudinal length of the wall portions 4a, 4b. The sections 30, 32 would be fully retracted in the closed position, of the carriage connector 2, and would remain so during the transition of the carriage connector into the open position. Once the carriage connector 2 is in the open position, the telescopic control means can be operated to extend the length of the chamber 12 to the amount that is required for coupling a first and second carriage connector 2 together. This allows variable coupling distances between two carriage connectors to be achieved, as will be described in detail later on.

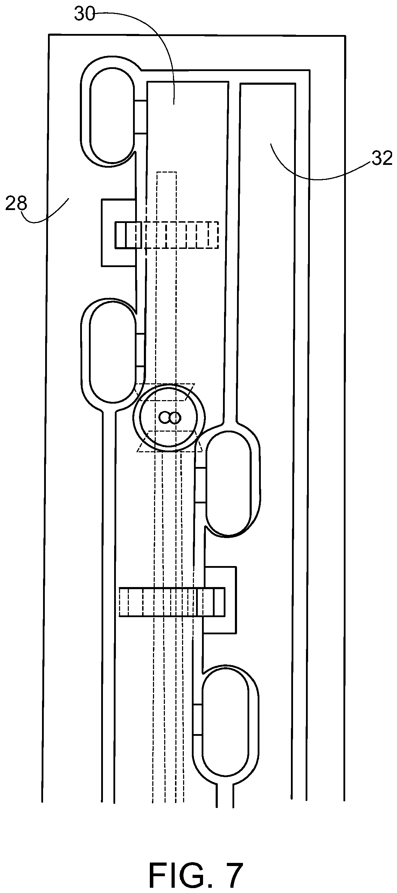

Figure 7 illustrates a cross-sectional arrangement of the sections 28, 30, 32, the guide rails and rack and pinion arrangements. For compactness, the rack teeth are recessed within the deep guide rails, and the inner and outer guide rails are not opposite each other but offset vertically to allow a thinner overall panel width. The offset arrangement also allows space in a particular position for the enclosed bevel gears as shown in dotted outline. The axles mounted to the middle section 30 correspond to the full vertical height of the middle section 30 meaning only one mechanical coupling shaft is necessary.

Returning to Figure 2, the central space between the wall portion 4a (inner section 28), swivel means 9a (portions 20, 26 and 22), and railway carriage 3 defines a first void 36 which is pressurised to give each of the elements 28, 20, 26 and 22 stability and stiffness, while maintaining sufficient flexibility such that the elements 28, 20, 26 and 22 may pivot freely at the points where they join 16a, 24, 16c and 14a to accommodate various movements of a railway carriage 3 in use, i.e. a first and second railway carriage coupled together via a carriage connectors and moving on a railway track.

Here, the elements 28, 20, 26 and 22 can be constructed using slightly flexible materials and their shape 'pre-distorted' so that they assume the desired `flat' profile when the void 36 has been pressurised to the desired pressure. An appropriate choice of material, shape, thickness and inflation pressure can give a lightweight structure with the required degree of flexibility and robustness.

Returning to Figure 4, the volume of pressurised air within the first void 36 remains substantially constant, when the carriage connector 2 moves between the open position, where the enclosed area resembles a substantially square shape, and closed position, where the enclosed area resembles a substantially triangular shape. Preferably, the pressurised air within the first void 36 is constrained by a sealed membrane (not shown) mounted within the first void 36. The membrane is inflatable and able to be pressurised to a desired air pressure. The membrane is preferably a flexible material, such as rubber, such that the membrane can alter its shape to accommodate variations in position imposed on it by the relatively rigid panels within which it is contained. This shape variation will comprise bending hinge-like movements at the sides, at the joins between the panels; and different upward and downward balloon-like bulges at the top and bottom respectively which will vary according to the position of the void. It is not necessary for the membrane to extend the full height of the first void 36; instead it occupies the majority of the void height but clearance is left at the top and bottom so that the membrane does not come into contact with other components.

Consequently, the first void 36 may be pressurised to any desired pressure, and this pressure will not change significantly whether the carriage connector is in the open position or closed position. This is because the cross-sectional areas are similar in both cases and as a result the enclosed volumes of air in the membrane are also similar in both cases. Therefore, it is not necessary to pressurise or depressurise the first void 36 during operation. Compressed air connections to the first void 36 are only needed for control purposes and to compensate for any leaks from the air system.

In addition to the first void 36, a second void 38 and third void 40 can be defined that are associated with the middle section 30 and outer section 32 respectively, such that each of the sections 28, 30, 32 have a corresponding void 36, 38, 40. This arrangement is illustrated by Figure 8, which shows a pair of wall portions 4a, 4b, and their three corresponding sections and voids, moving between the open position, at the top of Figure 8, and closed position, at the bottom of Figure 8.

The third void 40 is defined by a space within a rectangular structure 39 and is mounted to a side of the outer section 32, facing away from the chamber 12. The shape of the rectangular structure 39 substantially corresponds to the cavity of the middle section 30 such that when the outer section 32 is retracted, the rectangular structure 39 substantially retracts to within the middle section 30. As before, pressurising the air within the third void 40, preferably via a similar membrane to that of the first void 36, gives the outer section 32 and corresponding connectable end 34 stability and stiffness such that, in use, the connectable end 34 forms a weather-tight seal against the corresponding connectable end of an adjacent, second carriage connector.

The rectangular structure 39 is formed by rigid panels, however, a side of the rectangular structure 39 facing the railway carriage 3 comprises a rubber membrane such that the rectangular structure 39, and thus the third void 40, may alter its shape in response to externally applied forces, such as forces induced on the rectangular structure 39 by movement of the railway carriages in use and traversing a railway track, and/or the weather.

The second void 38 is open to atmospheric pressure and is defined by the space between the first void 36 and the second void 40. The shape of the second void 38, and its volume, may change rapidly and significantly when the railway carriages encounter sharp curves. Although the second void 38 is mostly enclosed, by the first and third voids 36, 40, it still has sufficient access to the atmosphere to allow large volumes of air to be admitted or expelled rapidly from within the second void 38.

Since it is desired to improve thermal and acoustic insulation, and reduce aerodynamic drag, of the carriage connector 2, the carriage connector 2 occupies a greater bulk than conventional designs. However, it is also desirable to keep the weight of the carriage connector 2 reasonably low to maintain energy efficiency of vehicle. These conflicting requirements are reconciled by having the air-filled voids 36, 38, 40 occupy most of the volume of the carriage connector 2, while using lightweight materials for the wall portions and the structures surrounding the voids.

The third voids, from the wall portions 4a, 4b, are coupled together using a flexible tubing arrangement. In this way, with the railway carriages traversing a sharp curve, any resulting increase in air pressure in one void on one side causes the other void on the other side to expand, with little change in the overall volume of air enclosed. The flexible tubing somewhat 'folds up' when the carriage connector 2 is in the closed position.

In some embodiments, there may be more than three voids. The number of voids may correspond to the number of sections of the wall portions. In other embodiments, some or all of the voids may not be pressurised.

Opening and closing the carriage connector 2, i.e. moving the carriage connector between the open and closed position, is achieved using pneumatic cylinders, along with low-power electrical functions, to actuate the portions 4a, 4b, floor 6, and roof portions 8. In this case, compressed air is used to drive the cylinders, which in turn actuates the wall portions 4a, 4b, floor portion 6, and roof portions 8. In other embodiments, any other such suitable means of actuation may be used to actuate the wall portions 4a, 4b, floor portion 6, and roof portions 8 to open and close the carriage connector 2.

A number of pneumatic cylinders are arranged to actuate the wall portions 4a, 4b, floor portion 6, and roof portions 8. Generally, compressed air is admitted into the cylinders and the wall portions 4a, 4b first open from their closed position to their fully open position, where they attach to the roof portion 8. Subsequently, the floor portion 6 is arranged to be raised up to fit between the now 'open' wall portions 4a, 4b and connects to them such that the chamber 12 is formed, still in a fully retracted position with some clearance from the corresponding carriage connector of an adjacent railway carriage.

As a second step, when the carriage connectors of both railway carriages intended to be joined are both fully open, another set of pneumatic cylinders are arranged to actuate the now complete wall, floor and roof assembly to extend the carriage connectors until they join.

Unlike a conventional design, whereby the standard operating practice is that carriage connectors must be open and coupled together as the couplers of a first and second railway carriages engage, in the present embodiment, the carriage connector 2 remains closed while the couplers of a first and second railway carriage engage. Once the coupling of the railway carriages has been successful and confirmed by signals from the coupler, authorisation is then given for the carriage connector 2 to be opened when desired - authorisation may be given by staff of the railway carriage or be automated. Once authorisation has been given, synchronised control signals, from the joining first and second railway carriage, ensure a corresponding first and second carriage connector open at the same time such that they may subsequently be connected together.

Although the starts of the extension sequences, of the wall portions 4a, 4b, floor portion 6, and roof portions 8, are synchronised between both vehicles, it is possible that they might extend at slightly different rates due to frictional variations or different air pressures which have not yet fully equalised via the couplers. In this case, the join between the carriage connectors might not be quite symmetrical midway between the two vehicles, but offset to one side, but this is not important. Staggering the initial opening sequences of the carriage connectors, i.e. one not opening until the second one is fully open, will reduce the minimum coupling distance required as the 'swing out' clearance required by the carriage connectors is only needed one at a time, not both simultaneously. This option can be chosen if the coupling distance is short to avoid the opening carriage connectors hitting each other.. Once the carriage connectors of both vehicles are both fully open in the retracted position, then the extension of both is initiated simultaneously.

It is not obligatory to open the corridor connections when two railway carriages are coupled via couplers. It might be desired, for example, to prohibit access between passenger coaches and parcel vans for security reasons. Equally a vehicle equipped with this carriage connector 2 may be coupled to any vehicle without a corresponding carriage connector if necessary. When separating two railway carriages, the carriage connectors are first unconnected, retracted and closed, after checking that no passengers or obstacles are in the immediate vicinity; and when full closure is confirmed, then the couplers are disengaged as a second step.

The roof portion 8 comprises an upper ceiling panel 49, lower ceiling panel 50 and roof cover 55, which are connected to one another to form the roof portion 8, as will be described later on.

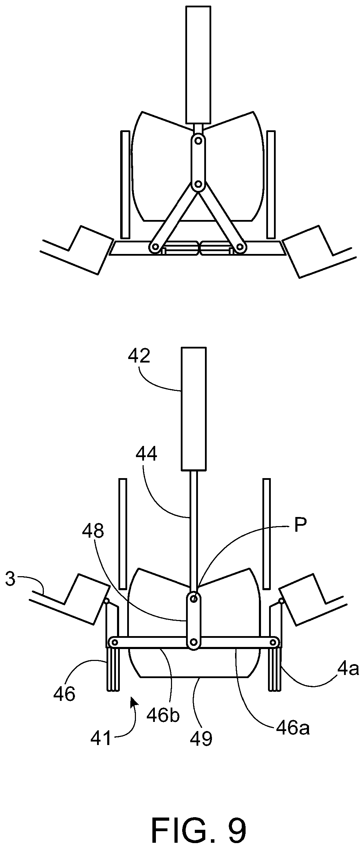

As illustrated by Figure 9, the actuation mechanism 41 for extending and retracting the wall portions 4a, 4b, with respect to the end of the railway carriage 3, is mounted within the railway carriage 3 below the roof cover 55. A first pneumatic cylinder 42 drives a piston 44 that is connected to the wall portions 4a, 4b via levers 46a, 46b connected to a short lever 48, such that as the piston 44 is driven away from the railway carriage 3, the wall portions 4a, 4b are prised to the open position (bottom of Figure 9) by the levers 46a, 46b and as the piston 44 is driven towards the railway carriage, the wall portions 4a, 4b are prised to the closed position (top of Figure 9) by the levers 46a, 46b. The levers 46a, 46b are robustly constructed and attached to the top of the inner sections of the wall portions 4a, 4b. In particular, one of the levers 46a connects to the wall portion 4a, and the other lever 46b connects to the other wall portion 4b.

As will be seen, other items are moved at the top of the carriage connector 2 requiring adequate force, which is facilitated by the 'prising apart' nature of the lever arrangement in the final stages of opening of the carriage connector 2. The bottom of the carriage connector 2 is able to move freely at this stage, however, so an actuation mechanism at the top only is sufficient without the need for another underneath floor level. Here, the word 'top' means close to an end that faces away from the ground when in use, and 'bottom' means close to an end that faces towards the ground when in use.

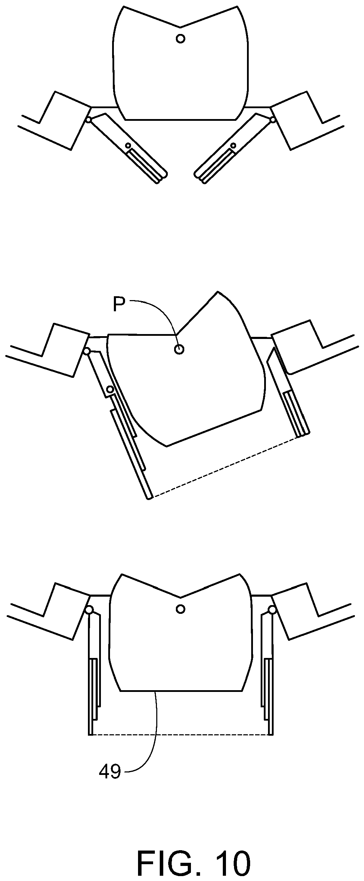

In the open position, the cylinder 42 pushes the levers 46a, 46b to a point midway between the inner sections of the wall portions 4a, 4b, using the piston 44 and short lever 48. As illustrated by Figure 10, the point P around which the short lever 48 can pivot in the open position is in effect the point around which the entire carriage connector 2 is arranged to swivel to accommodate angular relative movement of two connected railway carriages traversing curves. In the closed position, the cylinder 'pulls' the levers 46a, 46b substantially inside the end of the railway carriage 3.

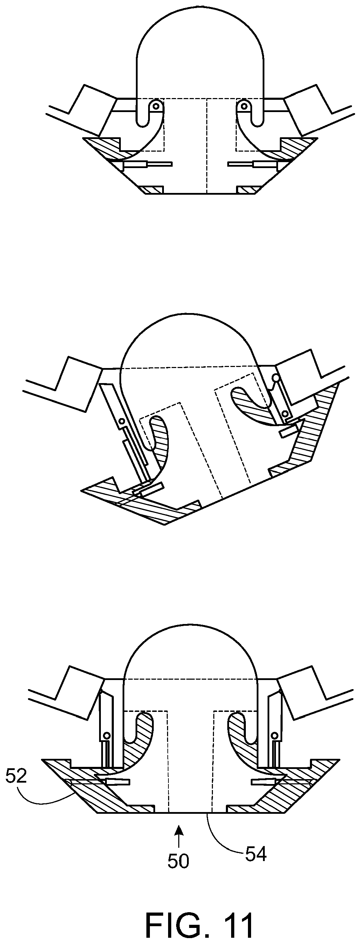

In addition to opening and closing the wall portions 4a, 4b, the same pneumatic cylinder 42 also moves the upper ceiling panel 49. The upper ceiling panel 49 is securely attached to the short lever 48, on a side facing towards the chamber 12, and is designed to slide freely over a lower ceiling panel 48 (seen in Figure 11) in such a way that a substantially flat surface is presented above the passageway of the chamber 12, and the actuation mechanism 41 is concealed from passengers passing through the chamber 12. The upper ceiling panel 49 is guided by rails surfaced with low friction material such as nylon acting on its edges.

The above arrangement ensures that when the carriage connector 2 is opening, the upper ceiling panel 49 is restricted to moving axially, prevented from being able to swivel, and the wall portions 4a, 4b open outwards equally. In the open position, however, the pivot P is in a position such that the upper ceiling panel 49 and wall portions of the carriage connector 2 are able to swivel, about the end of the railway carriage 3, freely and correspond to the same angles as controlled by the `parallelogram' action of the levers 46a, 46b, 48 and their respective pivot positions.

As illustrated by Figure 10, the shape of the upper ceiling panel 49 is necessary to accommodate the swivelling of the upper ceiling panel 49 while covering up the chamber 12 under all operating conditions but avoiding the pneumatic cylinder 42. During the closing process, i.e. the piston 44 is driven towards the railway carriage 3, the upper ceiling panel 49 is retracted within the railway carriage 3, above the ceiling of the railway carriage 3. In the closed position, the upper ceiling panel 49 is stored behind the wall portions 4a, 4b.

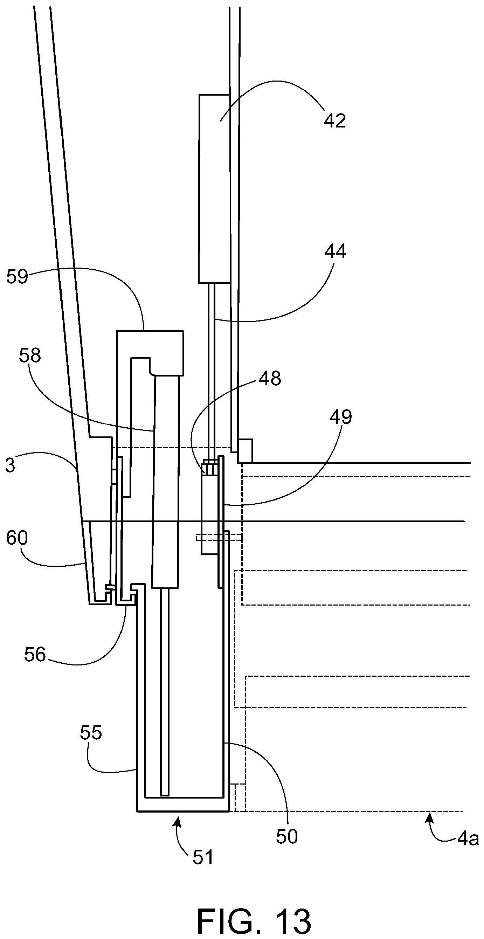

The upper ceiling panel 49 does not change its pivotal position when in operation, its only movement is swivelling at an angle when necessary. It is mounted vertically a short distance above the top of the end door aperture of the railway carriage 3 to allow the lower ceiling panel 50 to slide underneath it freely. This lower ceiling panel 50 may move longitudinally a considerable distance to accommodate variable spacing between a first and second railway carriage. At the furthest allowable extension of the lower ceiling panel 50 there is still an overlap between the upper and lower ceiling panels in both, of two connecting carriage connectors, such that both of the corresponding mechanisms remain concealed under all active operating conditions. The lower ceiling panel is arranged to be actuated by a separate, second pneumatic cylinder 58 (seen in Figure 13) mounted within the railway carriage 3.

It will be noted that the chamber 12 may narrow slightly when swivelling off-centre, and there may be a small gap between the edge of the upper ceiling panel 49 and the wall portions 4a, 4b. This gap can be filled with flexible draught-proofing materials fixed to the top of the wall portions 4a, 4b which are arranged to protrude inwards by the necessary distance. When the carriage connector 2 is closed, these materials extend over the top of the railway carriage end door aperture 'lintel' which is arranged to be slightly lower than the door height.

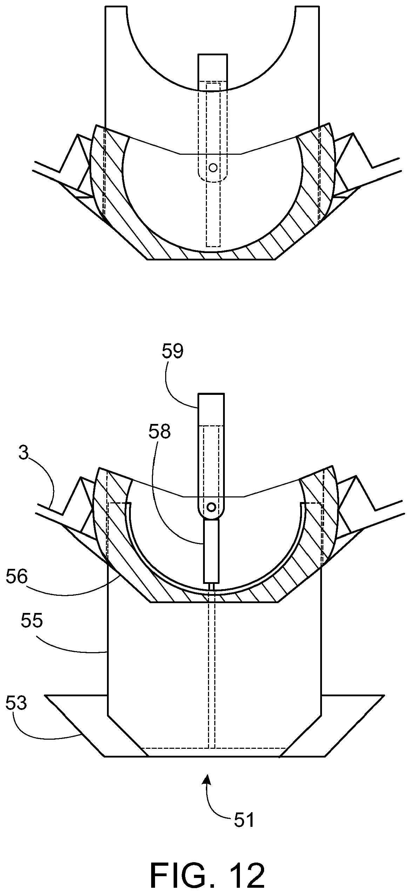

Figure 11 illustrates the lower ceiling panel 50. It is arranged to be attached to the outer sections of the wall portions when the wall portions are fully extended. In operation, the lower ceiling panel 50 together with the roof cover 55 (shown in Figure 12) form the structure of the roof portion 8, the outer end of which is pressed against an adjacent connecting carriage connector, in the next stage of deploying the carriage connector 2 such that it connects with a second, opposing carriage connector. In this way, the second pneumatic cylinder 58 (shown in Figure 12) acts as the telescopic control means for the sections of the wall portions, via the lower ceiling panel 50, such that as the lower ceiling panel 50 is extended or retracted, so too are the sections of the wall portions. In other words, the second pneumatic cylinder 58 controls telescopic variation in the length of the wall portions 4a, 4b. The lower ceiling panel 50 and roof cover 55 can pivot as necessary to accommodate relative movements of the coupled railway carriages, and in doing so this movement also controls the corresponding required extensions or retractions of the wall portions 4a, 4b.

Since in the closed position, the end of the carriage connector 2 is slightly narrower than the chamber 12 passage, to give a somewhat pointed end for better aerodynamic performance, it is arranged to be expandable with a spring arrangement. When closed, the outer parts 52 of the lower ceiling panel 50 (which also form the outer parts 53 of the roof cover 55 seen in Figure 12) are moved inwards by spring pressure to give the most compact arrangement. When opening, short brackets protruding upwards from the outer sections of the wall portions 32 engage with corresponding brackets protruding downwards from the movable sprung lower ceiling panel sections 52 and stretch these outwards to make the end wider, sufficient to cover the whole passageway of the chamber 12. These moveable sections 52 and fixed sections 54 of the lower ceiling panel 50 are shown in Figure 11.

Since the moveable sections 52 have to transfer the compressive spring force from the lower ceiling panel 50 to the top of the wall portions 4a, 4b, and also have to ensure the correct alignment of the outer ends of the wall portions 4a, 4b with the outer end of the roof portion 8, the sliding arrangements and the brackets are robustly constructed. For the sliding movement, a substantial square section rod moving in a square tube is used, and for the brackets, a `click in' type of flat snap fastener arrangement similar to a cupboard catch is preferable, rather than relying on spring pressure to hold a ball protrusion in a corresponding socket.

In addition to widening the chamber 12, these parts also extend to thin sliding ceiling parts under the end of the lower ceiling panel 50. The effect is to cover up the slots and holes vacated by the brackets and pivot pins of the actuation mechanism 41 when the carriage connector is fully open, as can be seen by Figure 11. To ensure that these parts remain level and flush against the lower ceiling panel 50, a second rod running in a tube is provided a short distance from the end of the carriage connector 2.

In the open position, and with the middle and outer sections still retracted within their corresponding inner sections, the carriage connector 2 extends slightly further than when the carriage connector 2 is in the closed position. This allows the carriage connector 2 to be clamped firmly against the end of the railway carriage 3 on resilient material when not in use, to obviate rattles and wear.

Figure 12 shows the upper parts of the roof portion 8. The roof cover 55 has a cross section of an inverted U shape, the edges of which are outside the telescopic wall portions 4a, 4b. The roof cover 55 is attached to the lower ceiling panel 50 at its outer end, furthest from the railway carriage 3. In common with the lower ceiling panel 50, the outer end of the roof cover 55 expands slightly when the wall portions 4a, 4b are open. These outer moving ends 53 of the roof cover 55 are attached to the moving ends 52 of the lower ceiling panel 50, and the main part 51 of the roof cover 55 is attached to the main part 54 of the lower ceiling panel 50. This same sprung expanding mechanism also allows for the effective narrowing of the space between the wall portions when the vehicles are traversing a curve in operation, allowing the wall portions 4a, 4b to remain at right angles to the roof cover 55, even though the wall portions 4a, 4b do not share the same pivoting point as the roof cover 55..

As illustrated by Figure 12, a 'turret' 56 forms a somewhat bridge shape over the roof cover 55, at the railway carriage 3 end. It can rotate about a pivot point to accommodate the swivelling of the carriage connector 2 when the railway carriages are traversing curves. Above the turret 56, is a fixed top cover 60 attached the railway carriage 3. Figure 13 illustrates a cross-sectional view of a top end of the railway carriage 3, showing the above described features.

As previously described, the first pneumatic cylinder 42 actuates the inner sections of the wall portions 4a, 4b. The second pneumatic cylinder 58 actuates the lower roof panel 50 and roof cover 55 outwardly to the desired extent, until it meets the adjoining, second carriage connector. The second pneumatic cylinder 58 operates in conjunction with further pneumatic cylinders at a floor level of the railway carriage 3 to give an even actuation pressure between the roof and floor portions of the carriage connector. The second pneumatic cylinder 58 is pivoted from a bearing hanging from the railway carriage 3 roof, and rotates with the turret 56. To allow the roof cover 55 to be retracted fully, the second pneumatic cylinder 58 is attached to the pivot by a fairly substantial bracket 59 (shown in Figure 13).

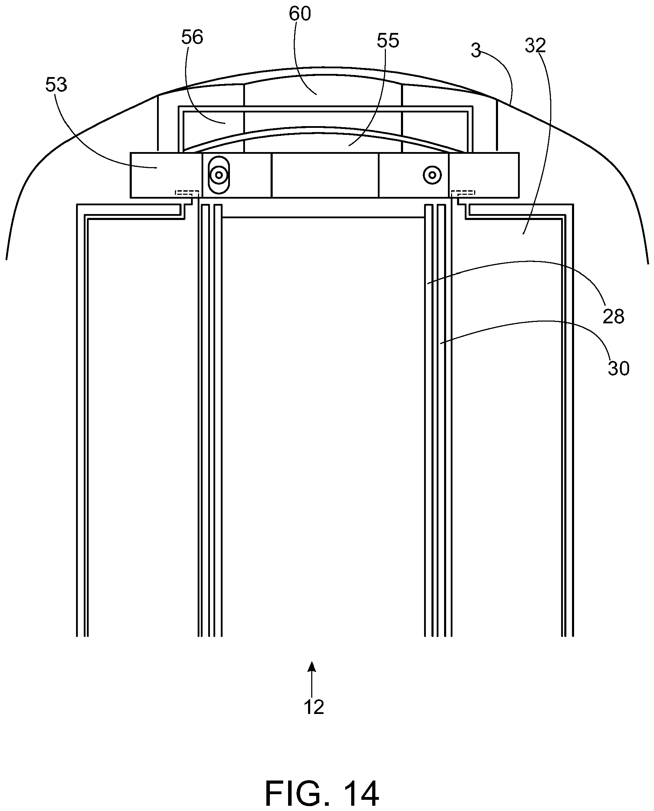

Figure 14 illustrates a cross-sectional view perpendicular to that of Figure 13, showing the arrangement of above described features. The outer moving ends 53 of the roof cover 55 are equipped with screw devices to join to the corresponding moving ends of the adjacent railway carriage when both are connected together. In turn, since the moving ends 53 of the roof cover are then already joined to the wall portions 4a, 4b by brackets as previously described, the arrangement ensures that when the roof portions 8 of two carriage connectors 2 are securely fixed together, the ends of the wall portions 4a, 4b are also firmly pressed together near the roof area. Similar arrangements, to be described, also ensure that the wall portions 4a, 4b are also firmly pressed together near the floor area when the full operation of connecting two carriage connectors has been completed.

The screw devices in the moving ends 53 of the roof cover comprise a threaded short rod extending from the top of a fixed cone on one side, which engages with a conical cavity with an internally threaded cylinder at the bottom on the other side. The conical cavity allows the threaded rod to find its way into the correct position when joining even if there is a slight misalignment of the roof portions at this point. When a sensor detects that the correct position for joining has been reached, a small electric or pneumatic motor rotates the threaded rod to screw the two parts together. Although now joined together securely in the horizontal direction, the conical cavity is mounted in its moving end 53 of the roof cover in such a way as to allow for vertical movement between the roof portions 8 due to dynamic variations in the relative heights of the two coupled railway carriages. Similarly, the connecting grooves and ridges in the ends of the wall portions 4a, 4b allow relative vertical movements of those parts of the carriage connector also.

The floor portion 6 of the carriage connector 2 can swivel and expand telescopically in a similar fashion to that of the wall portions 4a, 4b, but with significant differences. When the carriage connector 2 is closed, the floor portion 6 resides beneath the wall portions 4a, 4b to allow them, when extending to from the closed position to the open position, to be unobstructed by the floor portion 6. When the wall portions 4a, 4b are in the open position, the floor portion 6 is first raised up so that its top surface, facing the chamber 12, becomes substantially flush with the railway carriage 3 floor. The floor portion 6 can then extend, from within the railway carriage 3, using compressed air in step with the extension of the roof and wall portions 8, 4a, 4b.

The floor portion 6 is not directly connected to the wall portions 4a, 4b, but sits between them and is able to pivot vertically to some extent as well as horizontally, i.e. a plane which is parallel to the floor portion, to accommodate variations in railway carriage heights as they move on their suspensions.

With a first and second railway carriage connected via a first and second carriage connector, the distal ends of the two adjacent floor portions are locked together in use, maintaining a relatively flat floor throughout the joint carriage connectors and able to tilt to adapt to height variations between the railway carriages, maintaining easy passage for passengers, catering trolleys, parcels trucks etc throughout the joint carriage connectors.

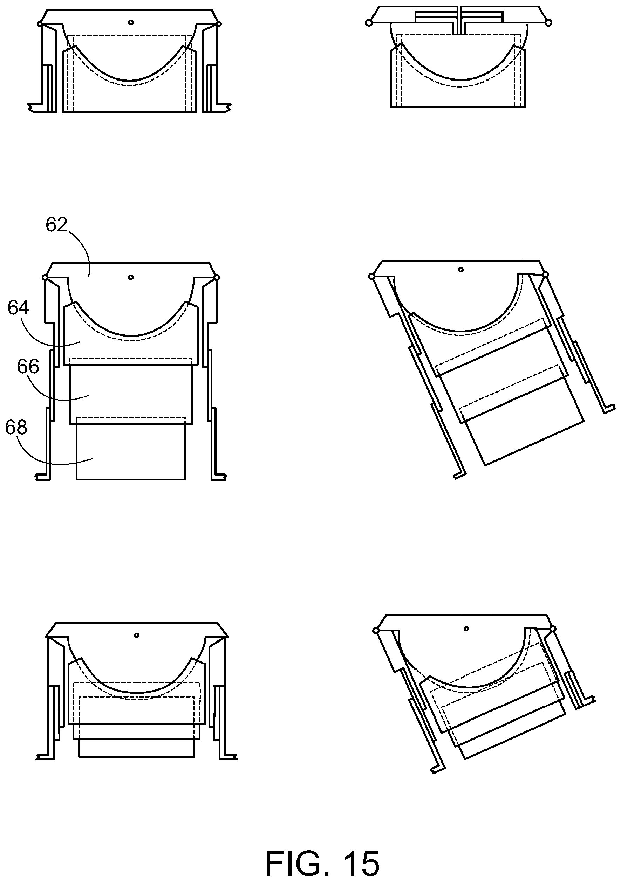

As illustrated by Figure 15, the floor portion 6 comprises a plurality of sections 62, 64, 66, 68. The first section 62, nearest the end of the railway carriage 3, is mounted to the railway carriage 3 and is able to move vertically, with respect to a parallel plane of the floor portion 6, to meet the wall portions 4a, 4b when rising to form the chamber 12. The first section 62 has a substantially semi-circular shape, with its convex outer edge, furthest from the railway carriage 3, corresponding to a concave inner edge of part of the second section 64 mounted adjacent to it. The second section 64 is attached to the first section 62 in such a way that it is able to pivot, horizontally, about the first section 62 and is also able to follow vertical movements of the first section 62.

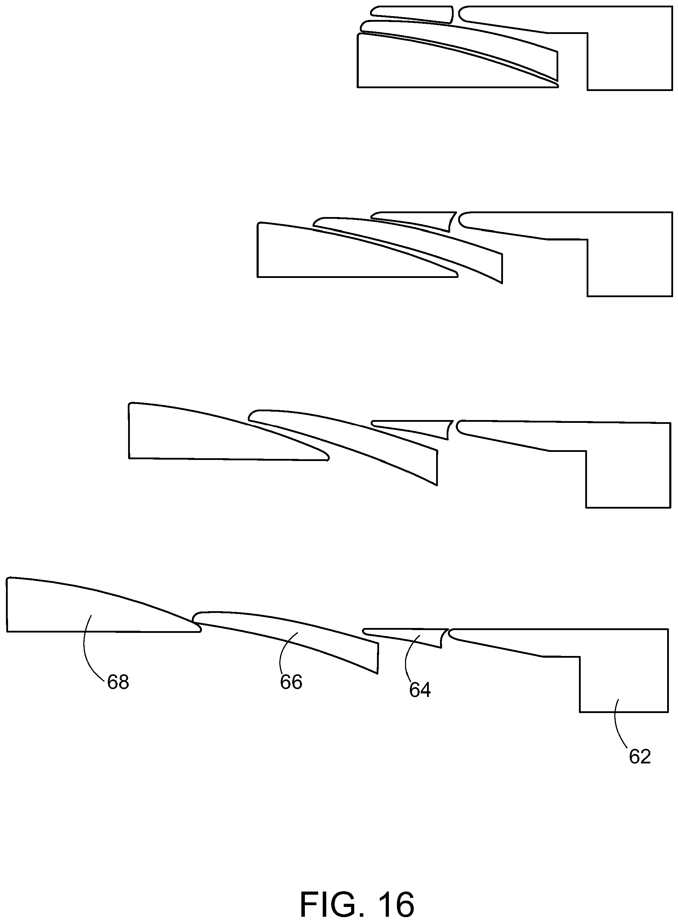

As illustrated by Figure 16, which shows a cross sectional view through the centre of the floor portion 6, the third and fourth sections 66, 68 are mounted below the first and second sections 62, 64 to give the floor portion 6 a telescopic expansion capability, similar to that of the wall portions 4a, 4b. In this case, however, the floor portion 6 needs to bear significant weight and present as little discontinuity as possible to the top walking surface consistent with robustness. The sections 62, 64, 66, 68 are therefore tapered in shape in the vertical dimension, retaining substantial depth towards the end of the railway carriage, using a somewhat elliptical cross section. In other embodiments, there may be less than or more than four sections making up the floor portion 6.

The second, third and fourth sections 64, 66, 68 form a telescopic unit with a similar concept to the wall portions 4a, 4b. However, instead of a linear movement pattern, the sections 64, 66, 68 are constrained to a curved relative motion when expanding from, or retracting to, the railway carriage 3 such that the top of each section is maintained closely underneath the adjacent overlapping section. The sections 64, 66, 68 remain in the same horizontal orientation, however, and present a substantially flat surface when extended, with minimal 'steps' while having a somewhat arched shape with significant depth for robustness to permit the use of lighter materials.

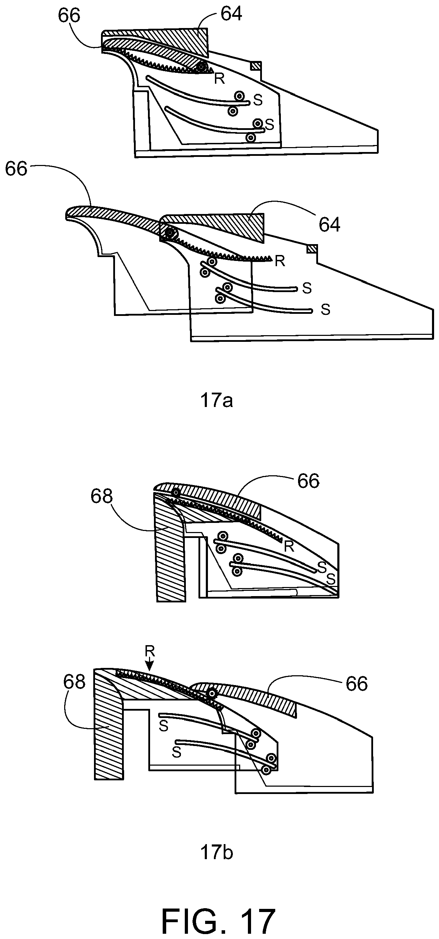

The telescopic movement of the sections 64, 66, 68 is illustrated by Figure 17. Supporting wheels mounted on the third section 66 grasp curved rails on the second and fourth sections 64, 68. The support rails and wheels are mounted on the sides of the sections 62, 64, 66, 68, which extend below the floor treads making bridge shapes which fit together compactly when the sections 62, 64, 66, 68 are fully retracted. When retracted to within the railway carriage 3, sufficient space remains for the coupler of the railway carriage, beneath the floor portion 6.

The wheels grasping each rail on each side are mounted as shown, to give optimal support to varying loads on each part of the floor portion 6, whether tending to tilt up or down. Since the angle of the support rail passing between the wheels varies according to the degree of extension, the width of the support rails varies correspondingly through its length, becoming narrower in the more curved positions such that the fixed distance between the wheel pivots is maintained and a robust support is provided in any position of the floor portion 6.

A similar rack and pinion arrangement, as used with the sections of the wall portions, is used with the sections of the floor portion 6 to ensure equal movement of both edges of the floor portion 6, and the symmetrical placement of the third section 66 between its adjacent sections. Pinions mounted on axles in the middle sections 64, 66 are coupled together as before, and engage with racks on the underside of the second section 64 and the upper side of the fourth section 68.

When the sections of the floor portion 6 are retracted, the sections 62, 64, 66, 68 fit together closely, but as they expand, only the visible floor surfaces remain in close proximity. As the floor portion 6 expands, the sections begin to separate due to their curved surfaces at the top while the flat lower edge of the sides remains horizontal. The movement pattern is provided by the shape of the support rails, similar to the floor surface in the case of the fourth section 68, and inverted in the case of the second section 64.

The two pinion axles in the third section 66 are coupled together using either toothed pulleys and a toothed belt or bevel gearing and a coupling shaft, as with the rack and pinion arrangement of the sections of the wall portions. This coupling is done within the casing of the middle floor tread. Since the outer pinions are recessed away from a thin edge of the middle section, the racks on the upper surface of the outer section begin away from the edge of the fourth section 68, and continue inwards further than the floor tread itself. The outer parts of these racks are substantially below the level of the treads and the rack teeth gradually rise inwards, keeping them in the right position for the movement shape and also result in less vulnerability to wear.

The other racks for the first section 64 are mounted on the sides underneath the floor treads, with a similar 'inverted' shape to the support rails to give the correct movement pattern. The rack teeth face upwards such that that the inner and outer pinion axles rotate in opposite directions. This arrangement allows for compact bevel gearing with a coupling shaft to fit within the middle section floor tread. In other embodiments, a toothed belt is implemented as a coupling method, whereby the rack teeth are instead arranged to face downwards, allowing the two axles to rotate in the same direction.

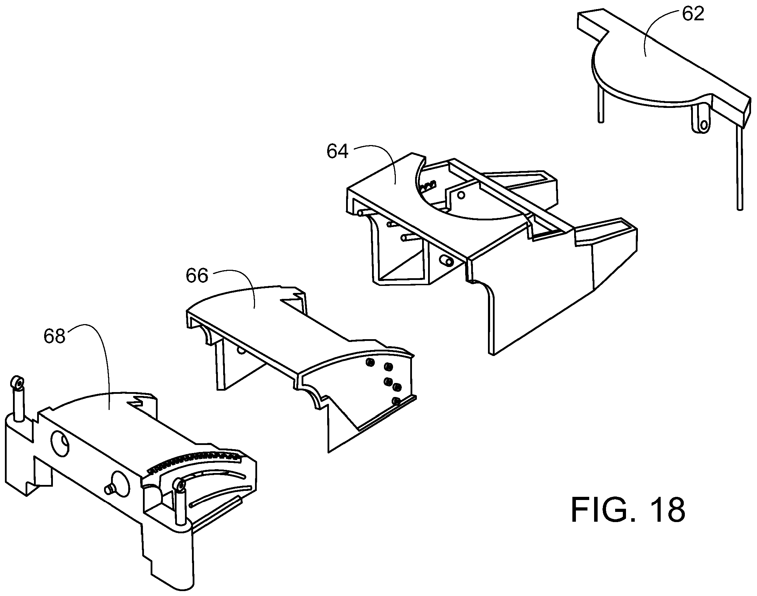

Extension or retraction of the sections of the floor portion 6 is achieved using two pneumatic cylinders mounted between the second and fourth sections 64, 68. The pistons and outer cases of these pneumatic cylinders can be seen in Figure 18. When coupling a first and second carriage connector, the sections of the floor portion 6 extend, from actuation via the pneumatic cylinders, until the distal end of the floor portion 6, in particular the end of the fourth section furthest from the railway carriage 3, meets the corresponding distal end of the floor portion of the adjacent second carriage connector. Subsequently, a mounting screw device on one of the floor portions meets a corresponding conical depression on the other floor portion such that the floor portions are aligned and screwed together, robustly connecting the floor portions 6 together in a similar manner to connecting the roof portions 8.

The floor portion 6 is able to slide vertically on two supporting rods, and is moved up and down by threaded rods geared together and driven by an electric motor, or alternatively by two linear actuators. After the couplers of a first and second railway carriage are engaged, the wall portions 4a, 4b of the carriage connector 2 are extended first, above the floor portion 6. Subsequently, the floor portion 6 is raised to its higher position to fit between the wall portions 4a, 4b, forming the chamber 12, along with the extended roof portion 8.

Flanges on the bottom of the third and fourth sections 66, 68 provide additional stiffness to these sections, and encourage the sections to slide smoothly against their neighbouring sections. Further, a bottom edge on the outer surface of the fourth section 68 comprises a longitudinal protrusion which allows small relative movement between the floor portion 6 and a coupler (which may be mounted to the vehicle beneath the floor portion 6) under conditions of high vibration of the vehicle and/or carriage connector 2.

Returning to Figure 1, as outlined previously, each of the portions 4a, 4b, 6, 8 have a mountable end, arranged to removably mount the portions to the railway carriage 3, and a distal end. With the carriage connector 2 in the open position, now forming the chamber 12 with walls, a floor and a roof arranged to move together in telescopic fashion, the distal ends of the portions 4a, 4b, 6, 8 are arranged to be extended until they meet the corresponding distal ends of an opposing, joining carriage connector such that they may connect to one another, joining the carriage connectors together.

The first end of the chamber 12, comprising the mountable ends, can be considered as a mountable interface 70, for removably connecting the carriage connector 2 to the railway carriage 3, and the second end of the chamber 12, comprising the distal ends of the portions 4a, 4b, 6, 8, can be considered a connectable interface 72, for removably connecting the carriage connector 2 to a second carriage connector 2. Here, the connectable interface 72 of the carriage connector 2 can be considered to comprise each of the connecting elements of the wall portions 4a, 4b, the roof portion 8, and the floor portion 6, as described above. For example, the connecting screw device of the roof portion 8 would be one of these elements etc.

In the fully extended position, i.e. large coupling distance between a first and second railway carriage, the combined floor portions 6 present a substantially flat surface rising slightly in the middle with few discontinuities, allowing easy passage of people, catering trolleys, parcels trucks etc. For a relevantly short coupling distance between a first and second carriage connector, the combined floor portions 6 presents a substantially flat floor surface falling slightly in the middle such that easy passage for people etc is maintained. In the case of a typical average coupling distance between two railway carriages, the combined floor portions 6 present a substantially level surface to facilitate easy access.

When the carriage connector 2 is not in use and presenting a rather triangular profile to the vehicle end, i.e. in the closed position, the floor portion 6 is arranged to be in either a lower or higher position. In the lower position, the floor portion 6 is centrally constrained and the coupler, of the railway carriage 3, can retract fully within the floor portion 6, keeping both secure and preventing unwanted movement, avoiding rattles and wear to the equipment when inactive. When the floor portion 6 is raised to the higher position, the coupler is released and can be deployed to engage the coupler of another vehicle without opening the carriage connector, allowing the floor unit 6 to rotate sideways freely. In this case, the mechanical arrangement ensures that the sideways movement of the coupler is tracked by the floor portion 6, and the coupler and floor portion 6 rotate together as necessary due to track curvature.

This tracking of the horizontal swivelling movements between the coupler and the floor portion is achieved using rollers attached to the second floor section 64 (not visible in Figure 18) which bear on the outer vertical edges of the coupler gimbal frame. This gimbal frame follows the angular horizontal swivelling movements of the coupler due to track curvature, and the coupler is pivoted within the frame to allow for its vertical movements. As a result, the complete floor portion is constrained to swivel from side to side in the same way as the coupler swivels due to track curvature. Since the floor portions of the two coupled railway carriages are not joined together when the carriage connector is closed, but may be in close proximity in some cases, this tracking arrangement ensures that the floor portions maintain their outer edges substantially in parallel and cannot collide even when sharp curves are being traversed.

In this higher position, the floor portion 6 remains horizontal but the coupler has some clearance for up-and-down movements as required. In other embodiments, the coupler mounting arrangements might not include a gimbal frame and in this case equivalent mechanical coupling arrangements can be provided to implement this tracking function instead. In some cases, the two coupled railway carriages may be far enough apart and the track curvature sufficiently low that the floor portions cannot collide in any case. If that situation applies, the tracking function may be omitted and the floor portions fixed in the neutral 'straight track' position when the carriage connector is closed.

When the carriage connector 2 is in use, the floor portion 6 is in the highest position, i.e. substantially level with the floor of the railway carriage 3 floor, somewhat further away from the coupler. In this case the rollers attached to the second floor section 64 have moved above and away from the coupler gimbal frame, so there is no longer any tracking between the movements of the coupler and the movements of the floor portion. The result is that when the carriage connector is open both it and the coupler can follow any necessary movements independently, as determined by the design of the various components and the vehicle dynamics. The above arrangement also ensures that only a relatively small space is required under the floor portion 6 to accommodate the coupler, avoiding the large and unsightly void of a conventional fixed railway carriage vehicle end, which may be a receptacle for flying debris such as leaves when the coupler is not in use. Figure 18 illustrates the components of the floor portion 6.

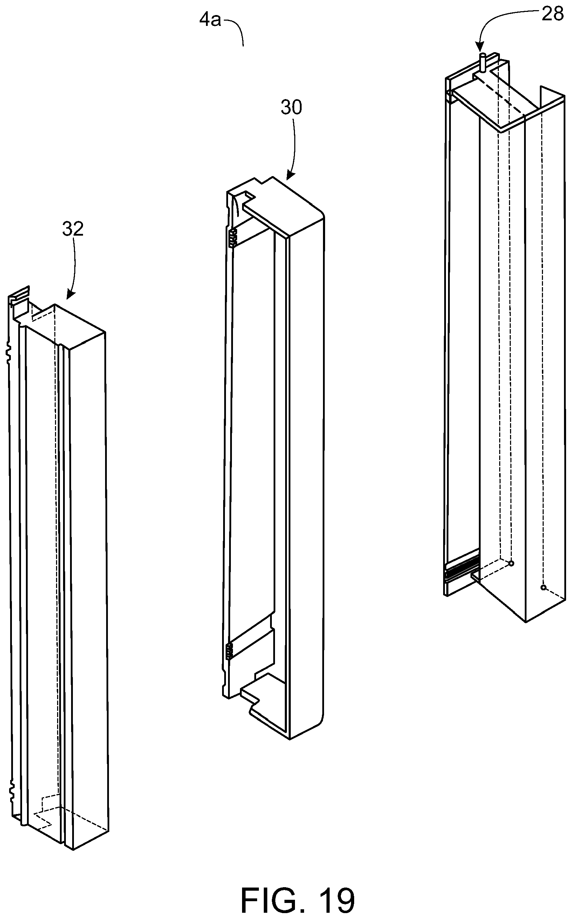

Figure 19 illustrates the sections 28, 30, 32 of the wall portion 4a. In use, i.e. when the carriage connector 2 is in the open position, the inner section 28 presents a panel forming part of the outer surface of the chamber 12. This panel, along with the outer panel 26 of the swivel means 9, and an outer face of the rectangular structure 39, present an elongated outer surface, facing away from the chamber 12 and to the ambient environment, of the carriage connector 2.

The sections 28 and 32 do not generally overlap when the carriage connector is in the open position. However, minor overlapping may occur when the connected railway carriages are traversing a sharp curve and/or with close coupling distances between the railway carriages. In these situations, the third void 40 can be compressed to a substantially triangular cross-section. As previously described the third voids, of the wall portions 4a, 4b, are connected by a flexible tubing arrangement such that when one void is compressed the other void expands.

Finally, the middle (second) section's 'tube' fits outside the third one. The middle section 30 is substantially rectangular, but curved inwards on a side nearest the railway carriage 3. This gives a closer fit to the first section 28 when in use, and also gives a smoother shape to the end when the carriage connector 2 is in the closed position and not in use. The middle section 30 is constructed from more robust and rigid materials than the other sections 28, 32, as the second void 38, within it, is open to the atmosphere and not pressurised. The middle section 30 also forms the visible outer surface of the end of the railway carriage 3 when the carriage connector 2 is closed - it must therefore be sufficiently robust to cope with minor impacts from twigs, birds etc hitting the end of the railway carriage 3 at speed.

It is not necessary for the pressurised first and third voids 36, 40 to extend the full height of the inner and outer sections 28, 32 respectively. Space can be left at the top and bottom, while still giving adequate stability and rigidity. The outer void 40 within the outer section 32 has a bottom space reserved to accommodate the roller from the floor portion 6, which is inserted when in use and pushes the bottom of the wall portions 4a, 4b outwards to make the connection with the adjacent vehicle, matching a similar pressure at the top of the wall portions 4a, 4b from the roof portion 8. The rollers of the floor portion 6 may move up and down, to accommodate dynamic variations in vehicle heights as they move on their respective suspensions, and move sideways, to accommodate the narrowing of the chamber 12 on sharp curves in a similar manner to the spring loaded expanding roof end described above.

Since the coupled railway carriages may encounter dips in the track or changes in gradient, the ends of the railway carriages are not necessarily exactly parallel. The inter railway carriage spacing is determined by the couplers, and the floor and roof portions of the carriage connector are able to telescopically adjust their length freely to accommodate the corresponding vehicle movements.

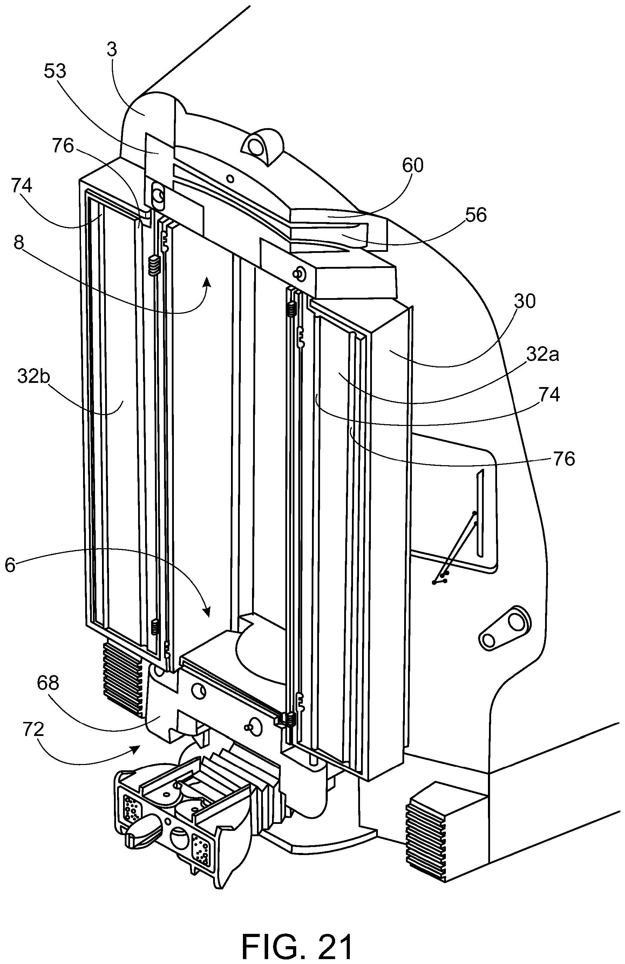

There may be some degree of rolling on uneven track, i.e. each railway carriage vehicle moving differently, the effect of which may be that at times, the angles of the roof and floor portions 6, 8 between their pivotal points are not the same. The floor and roof portions 8, 8 can swivel independently to allow for this displacement. Between the floor and roof portions 6, 8, variations are accommodated by a degree of flexibility in the wall portions. The outer section 32 of the wall portion is flexible as to allow the required degree of movement of the third void within. The result is that the ends of the wall portions, of the two vehicles, remain at substantially the same angle. The outer sections of a pair of connecting wall portions are connected together by corresponding vertical ridges 74 and grooves 76 (seen in Figure 21) on the surface ends of the pair of outer sections, i.e. the distal ends of pair of connecting wall portions. The wall portions and then held together by pressure from the roof and floor portions, which in turn are securely joined together, as described above.

For significant vertical movements, the outer sections, of the connecting pair of wall portions, may `slide' up and down, relative to one another, via the corresponding ridges 74 and grooves 76 when necessary as described previously. The floor portion 6 can tilt vertically on the pivots joining first sections 62 with second sections 64, and the latching arrangement which couples the ends of the roof portions together allows for vertical movement also as described earlier. In this way, dynamic variations in railway carriage heights can be accommodated.

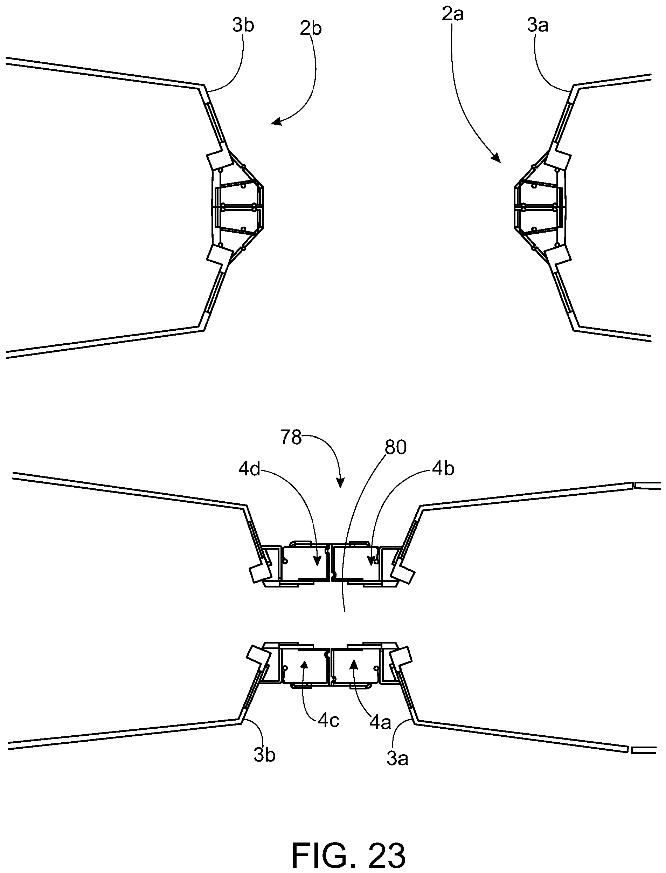

The coupling of a first and second carriage connector 2a, 2b (shown in Figure 23), mounted to a first and second railway carriage 3a, 3b, will now be described from a perspective of the actions of the first carriage connector 2a, as the second carriage connector 2b is arranged to carry out the same actions, in tandem, as the first carriage connector 2a.

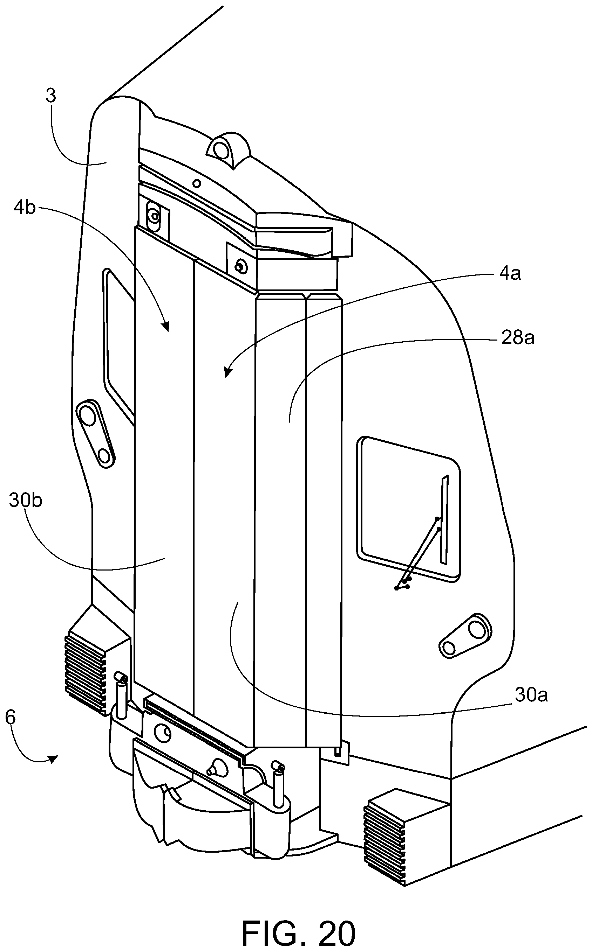

As illustrated by Figure 20, in the closed position, a first carriage connector 2a is not in use and presents a substantially pointed profile at the end of the railway carriage 3a allowing relatively low aerodynamic drag, in comparison to the aerodynamic drag of the end of a railway carriage having a conventional carriage connector of known form, when forming the front or rear end of a train. The floor portion 6 is in the lower position.

The floor portion 6 is then raised into the higher position releasing the coupler of the first railway carriage 3a, which may then be extended to engage the coupler of the second railway carriage 3b. The floor portion 6 is substantially horizontal and follows any sideways movements of the coupler. The floor portion 6 is able to follow the movements of the coupler using rollers on the inside of the floor portion 6 in contact with the outer edge of the gimbal frame, of the railway carriage 3a, which gives the coupler its horizontal freedom of movement. The gimbal frame is attached to lower part of the railway carriage end using pivots at the top and bottom of the centres of the gimbal frame, such that the pivots are in a vertical axis aligned with the pivot point P described earlier, about which point the whole carriage connector can swivel. The gimbal frame also has pivots in the centre of its sides, which are used to attach the coupler mechanism and thus give the coupler its vertical freedom of movement.

This arrangement therefore keeps the horizontal movement of the floor portion 6 in alignment with the horizontal movement of the coupler as it swivels according to the requirements of track curvature, when the couplers are coupled but the carriage connector is still closed. As the gimbal frame edge is vertical and the floor portion 6 is arranged to move vertically upwards, the floor portion 6 remains level in this position. This arrangement gives the coupler sufficient clearance to operate, both on sharp curves and for axial displacement, without the need for a large space underneath the floor portion to accommodate coupler movements which would be necessary if the floor portion were fixed in position. With the first and second carriage connector 2a, 2b in the closed positions, access between the first and second railway carriage 3a, 3b is prevented.

When in it is desired to open the first carriage connector 2a, the wall portions 4a, 4b are first extended, clearing the rollers mounted on posts attached to the ends of the floor portion 6. The ridges and grooves on the outer sections 32a, 32b of the wall portions 4a, 4b facilitate locking and sealing the wall portions 4a, 4b together when the wall portions are acting as 'doors', i.e. the carriage connector is in the closed position. When in the open position and the carriage connector is in use, the ridges and grooves engage with corresponding grooves and ridges on the other open carriage connector, aiding in positional alignment between the two carriage connectors providing a more weather-resistant seal while allowing vertical relative movement between the two carriage connectors.

Once the wall portions 4a, 4b are 'fully open', i.e. rotated from the railway carriage 3a from the flush position to the parallel position, the floor portion 6 is raised further such that the inside rollers on the floor portion 6 encounter a protrusion at the top of the gimbal frame, which forces the rollers outwards and causes the floor portion 6 to tilt upwards at its outer end, i.e. the fourth section 68. As the floor portion 6 is raised further, the outer rollers mounted on pillars tilt upwards and backwards and are inserted through holes in the underside of the wall portions to begin assembly of the carriage connector 2a as a complete unit, i.e. formation of the chamber 12.

The floor portion 6 is continually raised such that it clears the gimbal frame, giving a small degree of freedom for axial displacement of the floor portion 6 ensuring the outer rollers remain within the wall portions 4a, 4b. Raising of the floor portion 6 ceases when the floor portion 6 reaches the floor level of the railway carriage 3a, with the carriage connector 2a in a telescopically retracted position, i.e. the portions 4a, 4b, 6, 8 are not telescopically extended. This situation is shown in figure 21.

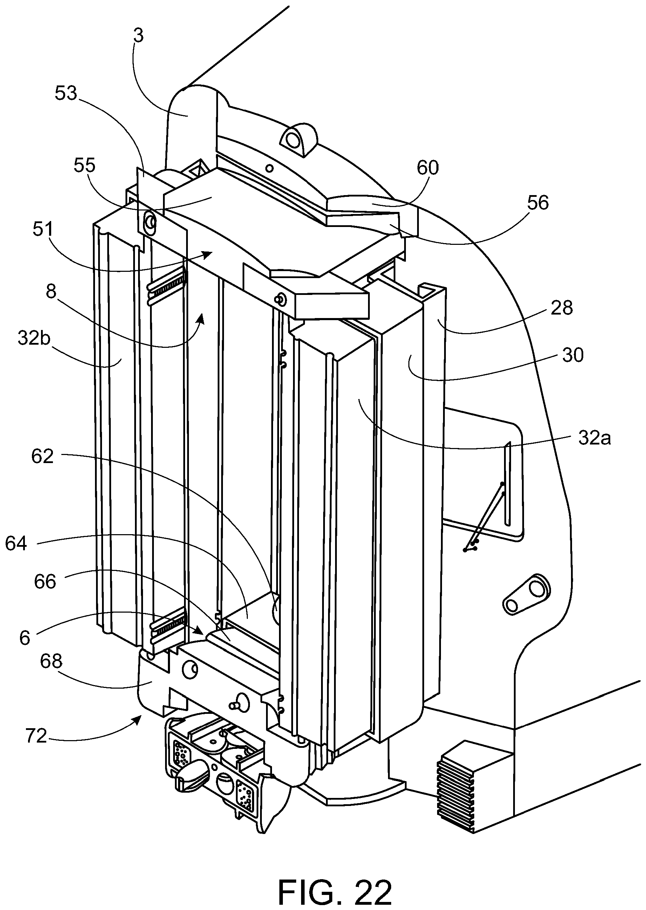

In the next stage, the carriage connector 2a is telescopically extended, via the pneumatic cylinders actuating the floor portion 6 and roof portion 8, such that the connectable interface 72 meets the second carriage connector 2b. As previously described, actuation of the roof portion and floor portion simultaneously causes actuation of the wall portions, in particular the outer sections, such that all the outer parts of the carriage connector extend telescopically in tandem. Minor misalignments are corrected by the conical protrusion, on the first floor portion, finding its way into the conical receptacle on the other floor portion. Here, sensors detect when this alignment has been achieved, prompting the firm screwing of the two floor portions together, providing a robust continuous walkway with a reasonably flat upper surface, pivoted at the end of each railway carriage 3a, 3b and tilting as necessary, i.e. able to axially move, to accommodate relative railway carriage movements. During this time, a similar arrangement aligns the two roof portions, in particular the two upper roof covers, and screws them together, but in this case, to a sliding internal part allowing vertical movement, providing a continuous roof which is also pivoted at the end of each railway carriage 3a, 3b to accommodate relative railway carriage movements. Also during this time, the corresponding ridge and groove arrangements on the wall portions meet. This extended state for carriage connector 2a is shown in Figure 22, and carriage connector 2b (not shown) presents a similar structure in the opposite direction.

In this way, as shown in Figure 23, the connectable interface of the first carriage connector 2a is connected to the connectable interface of the second carriage connector 2b forming the complete carriage connector 78, connecting the first and second railway carriages 3a, 3b together, allowing passengers to access the first and second railway carriages 3a, 3b via the complete carriage connector 78. The elongated chamber 80 of the complete carriage connector 78 is pivoted at the end of each railway carriage 3a, 3b, about the mountable interfaces. In other words, as the first and second railway carriages 3a, 3b traverse curves on a railway track, moving relative to one another, the complete carriage connector 78 can swivel to accommodate these relative movements.

The shortest allowable coupling distance between the first and second railway carriages 3a, 3b is determined by having sufficient clearance to allow the wall portions, of the first and second carriage connectors 2a, 2b, to open (or close) in the telescopically retracted position without obstructing one another. When the carriage connector is closed, it is folded up sufficiently such that a clear unobstructed view is afforded to a driver at the end of a railway carriage.

The above mechanisms arranging the formation of the complete carriage connector 78, formed from the connected first and second carriage connectors 2a, 2b, ensure the complete carriage connector 78 is always straight and that angular movement, due to track curvature, being allowed for at the ends of the first and second railway carriages 3a, 3b and not near the join of the first and second carriage connectors 2a, 2b, i.e. at the connectable interfaces, as in a typical traditional design.

In some embodiments, the mating ends of the carriage connector may have flexible rubber mounting to give them flexibility when the carriages are traversing the top of a hump or the bottom of a hollow in the track.

Swivelling of the complete carriage connector 78 will now be described. As explained above, the length of the wall portions 4a, 4b are able to be varied independently from one another, via telescopic extension/retraction. Telescopic extension and retraction of the wall portions is not fixed. Therefore, during a swivelling movement of the complete carriage connector 78 to accommodate at curve, the lengths are the wall portions 4a, 4b are able to suitably independently vary to accommodate traversal of the curve, as well as the wall portions 4a, 4b being able to pivot about the end of the railway carriage 3a. In particular, the length of the wall portions 4a, 4b will inversely vary with respect to the one another, i.e. when wall portion increases in length, the other will decrease in length and vice versa. Further, the lengths of the wall portions in a connected pair, i.e. a wall portion 4a from the first carriage connector 2a and the corresponding connected wall portion 4c from the second carriage connector 2b, will vary in whichever ways are necessary to accommodate various kinds of relative vehicle movements As a result, the elongated chamber 80 is maintained at substantially the same length overall, this length being determined by the couplers of the first and second joined railway carriages 3a and 3b underneath it. The components of the complete carriage connector 78 are able to move freely so that little stress is placed upon them when the first and second railway carriages 3a, 3b are traversing curves, preventing the structural integrity of the carriage connectors 2a, 2b from being compromised. This extension and corresponding retraction movement, or variation in length, of the wall portions 4a, 4b, along with their pivotal movement, when traversing a curve can be seen in Figure 8.

As the wall portions pivot and extend/retract to accommodate traversal of curves, the floor and roof portions 6, 8 correspondingly pivot to accommodate this movement.

For example, looking at Figure 23, if the second railway carriage 3b begins to traverse a left bending curve, i.e. towards the bottom of the page, all of the wall portions will pivot accordingly, and the length of the wall portion 4a will decrease while the length of the wall portion 4b will increase, and the length of the wall portion 4c will decrease and the length of the wall portion 4d will increase. During this time the roof and floor portions of each carriage connector also pivot accordingly. The swivel means 9a, 9b facilitate the extension and retraction movements of the wall portions, and thus facilitate the swivelling movement of the complete carriage connector 78.

As another example, if the railway carriages are in the process of traversing a sharp reverse curve such that both are approximately in parallel but their centres are not in line, and railway carriage 3b appears lower in Figure 23 than railway carriage 3a, then the length of wall portions 4a and 4d will decrease and the length of wall portions 4b and 4c will increase in comparison to the normal situation on straight track.

From the pivoting arrangement of the portions 4a, 4b, 6, 8, the chamber 12 can be considered as able to pivot about its mountable interface 70 in a plane which is parallel to the floor portion 6.

On full telescopic extension of the complete carriage connector 78, i.e. a maximum coupling distance between railway carriages, there may gaps in the outer sides of the complete carriage connector 78, i.e. the sides facing away from the elongated chamber 80. These gaps are inconsequential, as the second void 38 is open to the atmospheric pressure and not pressurised. However, to improve aerodynamic, acoustic and thermal performance, and to prevent ingress of debris such as leaves, these gaps may be filled.

One example of filling these gaps is by mounting an extensible fabric cover on a sprung roller between the first and third voids of each wall portion such that gaps are filled, similar to that of a roller blind. Each sprung roller is mounted to the corresponding inner section of the wall portion. The fabric fits inside the middle and outer sections 30, 32, and is only visible when gaps arise in the outer sides of the complete carriage connector 78 on full telescopic extension.

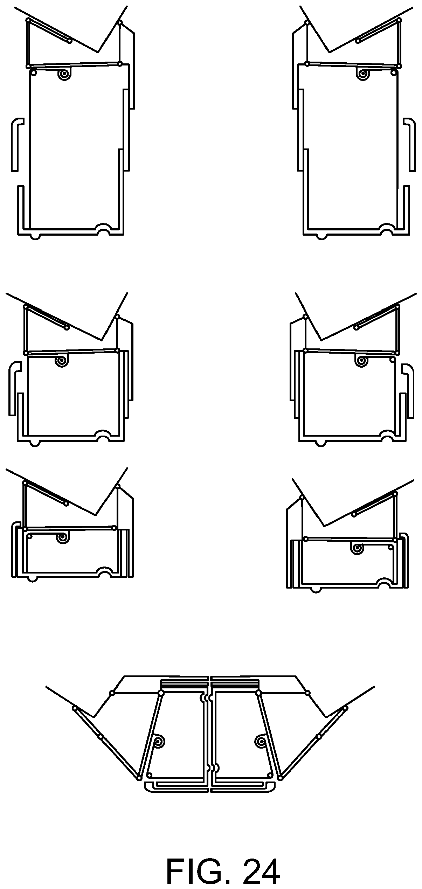

Space is limited at the outer part of the first void 36, when the railway carriages are traversing a sharp curve and the third void 40 is pressed up against the first void 40. Therefore, as illustrated by Figure 24, a small diameter roller is freely pivoted and mounted on the end of the first void 36 to maintain the fabric in the correct position. A larger diameter sprung roller, containing a reserve of fabric, is also mounted near the end of the first void 36. The opposite end of the fabric is secured to the inner end of the third void 40, while the third void 40 is able to deform and press on it freely. As deformation of the voids may inhibit the sprung roller from rotating as necessary, a curved guard is mounted to the sprung roller to prevent direct contact of the sprung roller with the voids.

Although a similar fabric arrangement with a horizontal roller could be used to fill the gaps appearing at the top of the wall portions, these are relatively small in area and the benefits might not be worth the additional complication. Rain penetrating here will simply drain out at the bottom. The chamber 12 of the carriage connector 2 is well protected from the elements by the roof and wall portions 8, 4a, 4b.

As an alternative to the roller blind technique, some highly stretchable fabric may be used to fill the gaps with appropriate mounting arrangements. There is space to fold up the fabric if necessary, so that it only becomes taught when gaps in the structure are beginning to open up, reducing the range over which it must stretch. Yet another alternative is a bellows structure of conventional form, especially the double wall type like a succession of rubber tubes joined together which may be compressed or expanded to a large extent.

In both the closed and open configurations of the carriage connector 2, a smoother profile is presented for relatively better aerodynamic performance having reduced drag with respect to conventional arrangements, in particular, a significant improvement on a conventional square ended vehicle and narrow bellows gangway arrangement.

The interaction between the ends of the two railway carriages 3a, 3b is primarily controlled by the engaged couplers of the carriages. As explained, when the carriage connectors 2a, 2b are closed, the couplers are the only things joining the two railway carriages. The couplers are designed to cope with the maximum traction and braking forces specified with a margin of safety, and also have a degree of lateral damping to limit sideways oscillations.

As the floor and roof portions 6, 8 of the carriage connector 2 are operated by compressed air, once the first and second carriage connector 2a, 2b have been firmly connected together, the air circuits of the pneumatic cylinders can be controlled to alter the flexibility, or `springiness', of the combined carriage connector 78. Closing the air circuits of the pneumatic cylinders provides a degree of springiness to the complete carriage connector 78 to reduce the transient acceleration and braking forces the couplers have to cope with, to a degree dependent on the enclosed air volume before the closing valve. On the other hand, if the air circuits of the pneumatic cylinders are opened to the atmosphere, the components of the complete carriage connector 78 are able to move more freely. An intermediate between these two extremes, varying the size of vent apertures of the pneumatic cylinders, can give varying degrees of damping. A designer can control this degree of damping as desired to give the preferred optimum for a particular railway carriage, or if necessary make the degree of damping programmable for best results under particular operating conditions.

In some embodiments, when the carriage connectors 2a, 2b are in use to form a complete carriage connector 78, dampers restricting relative rotational movement of the floor and/or roof portions 6, 8 provide additional lateral damping between railway carriage ends. In this case, the dampers would be mounted to the roof portions, to discourage twisting movement from torsional stresses.

As the optimum stiffness of the carriage connectors is heavily dependent of the mass of the railway carriages and the characteristics of their suspension, the stiffness of the components of the carriage connector can be altered depending on the mass and suspension characteristics of particular railway carriages. Stiffness of the carriage connector may be altered by using different materials and/or the degree of pressurisation of the air in the voids 36, 40.

When railway carriages are coupled together via carriage connectors, the arrangements provide some additional safety in the event of accident. If a collision causes the transient compressive forces on the coupler to exceed limits and its mounting starts to deform, the pneumatic cylinders in the floor and roof portions 6, 8 of the carriage connector 2a will be rapidly compressed. High pressure release valves in the air circuits of the pneumatic cylinders can vent to the atmosphere through appropriate orifices and assist in dissipating the energy.

If, in spite of the assisted energy dissipation, the compete carriage connector 78 is forced into its telescopically retracted position, in some embodiments, override protectors of conventional form are arranged to engage one another. The override protectors, faced with horizontal grooves and ridges to prevent relative vertical movement, are securely attached to railway carriage underframes and positioned such that they remain disengaged on the sharpest curve at the closest coupling distance of a first and second carriage connector 2a, 2b. The override protectors engage if both railway carriages 3a, 3b are close enough for the carriage connectors to be fully telescopically retracted but still joined, an arrangement which would not occur in normal operation, as it is preferable to have some telescopic extension of the carriage connectors. The voids 36, 40 in the wall portions 4a, 4b, now 'squashed together', will assist to some extent in resisting excessive compressive forces in accident situations as well. In further embodiments, energy-absorbing elements may be incorporated in the carriage connectors, or other parts of the railway carriage, if desired to give the required energy absorbing performance.

With the carriage connector closed, the arrangement provides good crashworthiness protection. The multiple layers of the structure are folded up within the robust square section portal frame, which is angled to give a wedge-like arrangement. Even if components start to disintegrate in extreme conditions, they will be pushed into this receptacle, dissipating energy as they do so. For minor impacts with small objects, the outer 'ring' of the second void 36 is sufficiently robust to offer structural stability of the carriage connector in the face of these impacts. As the forces of the impacts increase, contact with the third void 40 will be made, which is predominantly springy such that obstacles are repelled. More serious collisions may cause permanent deformation of the structure, but the inside of the vehicle is well protected with the inflated air spreading the forces onto the inner doors over a wide area, rather than a point impact to cause rupture. For more extreme impacts, the forces may cause the voids to burst and the outer structure to disintegrate, but the resulting debris will tend to be forced into the wedge shape to help in resisting the applied forces before the closed wall portions 4a, 4b eventually burst or the portal structure deforms.

Most vehicles will only find themselves in leading positions for low speed shunting movements, so a moderate degree of crashworthiness protection will be sufficient. For those vehicle ends intended to lead the train at high speeds in service, higher levels of robustness are desirable. It may also be necessary to increase axle loads to make it more likely the train end remains on the track in collision situations. On the other hand, excessive weight is undesirable for vehicle ends normally within a train.

These conflicting requirements can be addressed with an alternative embodiment of the carriage connector design and vehicle structure as follows. The robust square section pillars surrounding the carriage connector are hollow, and for normal vehicle ends are left empty. For railway carriage ends incorporating driving cabs, which will sometimes find themselves at the front of higher speed trains, the pillars can be filled with sand. Sand is stable, inert, cheap and good for absorbing vast amounts of transient energy through friction between the grains. This provides an additional means for dissipating energy in the railway carriage end structure as well as the normal deformation of metal. It is also possible to incorporate additional energy absorbing material of various forms in the spaces between the carriage connector and the railway carriage sides to give extra protection for a driving cab.

Adding these materials will give additional weight, helping to increase axle loads as required in this situation, and/or with ballast weights elsewhere depending on the equipment fitted. Such methods are all reversible if required: if a driving cab is no longer needed some other facility may be substituted and the additional protection items removed, so the vehicle weight is desirably decreased.

The carriage connector 2 can be retrospectively, and removably, mounted to vehicles on a railway network needing conventional carriage connections, from high speed passenger trains on straight main lines to parcels vans having to negotiate tight curves in cramped depots and sidings. The carriage connector can therefore replace these conventional carriage connections to connect railway vehicles together.

The above described arrangement of the carriage connector 2 allows for a plurality of advantages when compared to the arrangements of conventional carriage connections. In particular, the shape of the carriage connector 2 has relatively better aerodynamics for relatively lower energy consumption both when coupled in a train or at the leading or trailing ends of a train, i.e. the open and closed positions respectively, as well as presenting a less restricted view for the driver of train when the carriage connector is closed and mounted to the driver cab end.

The above described arrangement of the components of the carriage connector 2 offer relativity improved heat and sound insulation, as well as giving the complete carriage connector 78 the ability to accommodate sharp curves, for universal application, covering all railway routes, both on passenger and freight vehicles as required. Further, these component arrangements, such as telescopic variation of the longitudinal length of the potions 4a, 4b, 6, 8 permit a wide range of inter-vehicle coupling distances, allowing the use of both conventional couplers and retractable ones with different vehicle positioning methods.

The opening and closing of the carriage connector 2 is arranged to be controlled and/or automated electronically, while the voids 36, 38, 40 allow the carriage connector 2 to have relatively less weight, while giving the carriage connector 2 sufficient structural stability.

## Claims

1. A carriage connector (2) for connecting railway carriages of a train together comprising:
a pair of wall portions (4a, 4b);
a floor portion (6); and
a roof portion (8),
wherein the portions form a passage (12) with a first end having an opening (10) and forming a mountable interface (70), for mounting the carriage connector to a railway carriage, and an opposing end forming a connectable interface (72);
wherein the wall portions are configured to allow their longitudinal length to be varied;
wherein the portions are arranged to be retracted to the mountable interface such that the wall portions obstruct the opening, defining a closed position of the carriage connector, and are arranged to be extended from the mountable interface to form the passage, defining an open position of the carriage connector;
wherein the carriage connector is movable between the open and closed positions; and
**characterised in that**, in the closed position, the carriage connector presents a pointed profile for allowing relatively low aerodynamic drag to be induced on the carriage connector when the carriage connector is at an end of the train.

2. A carriage connector according to claim 1, wherein the roof portion is configured to be, in the closed position, retracted within the railway carriage, and in the open position, extended from within the railway carriage to form the passage.

3. A carriage connector according to claim 1 or 2, wherein the floor and roof portions are configured to allow their longitudinal length to be varied in accordance with the longitudinal length of the wall portions such that the longitudinal length of the passage can be varied.

4. A carriage connector according to any of the preceding claims, wherein each wall portion comprises at least a first section (28) slidably mounted to a second section (30) such that one section may slide relative to the other to allow the longitudinal length of the wall portion to be varied.

5. A carriage connector according to claim 4, wherein the sections are configured such that the sliding movement is constrained in a longitudinal direction of the wall portions.

6. A carriage connector according to any of the preceding claims, wherein movement of the carriage connector between the open and closed positions is controlled by an actuation means.

7. A carriage connector according to claim 6, wherein the mountable interface is a pivot and, in the open position, the portions, and thus the passage, are arranged to pivot about the mountable interface in a plane which is parallel to the floor portion.

8. A carriage connector according to claim 6 or 7, wherein each portion has a mountable end (14a), which forms part of the mountable interface, and a distal end (16a), which forms part of the connectable interface.

9. A carriage connector according to claim 8, wherein the wall portions can pivot from a first position, generally parallel to an axial direction of a railway carriage, to a second position, generally perpendicular to an axial direction of a railway carriage, such that distal ends of the wall portions, in the first position, are generally flush closing the opening at the mountable interface, and in the second position, form part of the passage; and
wherein the wall portions are moveable between the first and second positions.

10. A carriage connector according to claim 9, wherein the floor and roof portions are configured not to obstruct the wall portions during movement between the first and second positions.

11. A carriage connector according to claim 9 or 10, wherein the actuation means is arranged to control and/or synchronise movement of the wall portions between the first and second positions, and thus controls movement of the carriage connector between the closed and open positions respectively.

12. A carriage connector according to claim 11, wherein each wall portion has an inner face, facing the passage, and an opposing outer face, and further comprises a planar outer portion (22) having a mountable end (14c), forming part of the mountable interface, and a distal end (16c) that is connected to the outer face of the wall portion via a hinging member (24) such that a first void (36) is defined in the space between the wall portion, outer portion and hinging member; and
wherein the outer portion is arranged to pivot about the mountable interface in the same plane as the wall portion.

13. A carriage connector according to claim 12, wherein a first angle (A), defined between the outer portion and the hinging member, and a second angle (B), defined between the wall portion and hinging member, are arranged to be controlled in tandem via a coupling means.

14. A carriage connector according to claim 13, wherein the coupling means couples the movement of the wall portion and outer portion such the first and second angles can be controlled in tandem.

15. A carriage connector according to any of claims 12 - 14, wherein the air pressure of the first void is arranged to be varied to allow the stiffness of the wall portion, outer portion and hinging member to be varied.

16. A carriage connector according to any of claims 12 - 15, wherein the distal end of the wall portion comprises a connectable structure (39) on the outer face, having a further void (40), that forms part of the connectable interface, and the air pressure of the further void is arranged to be varied to allow the stiffness of the connectable structure to be varied.

17. A carriage connector according to claim 16, wherein an intermediate void (38) is defined between the first and further voids, and the air pressure of the intermediate void is unvaried and exposed to ambient air pressure, or the air pressure of the intermediate void is arranged to be varied.

18. A carriage connector according to any of claims 14 to 17, wherein, in use and in the closed position, the coupling means is arranged to maintain the first and second angle such that the carriage connector has a substantially triangular cross section to facilitate reducing the aerodynamic drag of the carriage connector.

19. A carriage connector according to any of the preceding claims, where the floor portion is arranged to be mechanically coupled to a coupler of the railway carriage such that the floor portion tracks the movement of the coupler when the carriage connector is in the closed position.

20. A first and second carriage connector (2a, 2b) according to any of claims 7-19, wherein the connectable interface of each carriage connector is arranged to connect to one another connecting the passages, and thus the carriage connectors, to form an extended passage, and thus an extended carriage connector.

21. A first and second carriage connector according to claim 20, wherein the wall portions, the roof portions and the floor portions of each carriage connector connect to one another to form an interconnected roof and floor, and a first and second interconnected wall.

22. A first and second carriage connector according to claim 21, wherein retraction and extension of the roof and floor portions is constrained when the floor and roof portions are interconnected.

23. A first and second carriage connector according to any of claims 21 or 22, wherein, in use, the extended carriage connector connects the ends of a first and second railway carriage together and is in a neutral arrangement when the ends of the railway carriages are parallel with respect to one another, and in a swivel arrangement when the ends of the railway carriages are non-parallel with respect to one another,
wherein, during the neutral arrangement, the longitudinal length of each wall portion, in an interconnected wall, is the same; and
wherein, during the swivel arrangement, the longitudinal length of each wall portion, in an interconnected wall, is arranged to be varied inversely with respect to one another such that the longitudinal length of the extended passage remains constant.

24. A first and second carriage connector according to claim 23, wherein the portions
are further arranged to pivot about the mountable interface in a plane which is perpendicular to the floor portion such that variations in the height of the first and second railway carriage can be accommodated when forming the extended carriage connector.

## Patentansprüche

1. Wagenverbinder (2) zum Verbinden von Eisenbahnwagen eines Zuges miteinander, umfassend:
ein Paar Wandabschnitte (4a, 4b);
einen Bodenabschnitt (6); und
einen Dachabschnitt (8),
wobei die Abschnitte einen Durchgang (12) bilden, dessen erstes Ende eine Öffnung (10) aufweist und eine montierbare Schnittstelle (70) zum Montieren des Wagenverbinders an einem Eisenbahnwagen bildet, und dessen gegenüberliegendes Ende eine verbindbare Schnittstelle (72) bildet,
wobei die Wandabschnitte dazu konfiguriert sind, es zu ermöglichen, dass ihre Längslänge verändert wird,
wobei die Abschnitte so ausgelegt sind, dass sie zu der montierbaren Schnittstelle eingefahren werden, sodass die Wandabschnitte die Öffnung versperren, wodurch eine geschlossene Position des Wagenverbinders definiert ist, und so ausgelegt sind, dass sie von der montierbaren Schnittstelle ausgefahren werden, um den Durchgang zu bilden, wodurch eine geöffnete Position des Wagenverbinders definiert ist,
wobei der Wagenverbinder zwischen der offenen und der geschlossenen Position bewegbar ist; und
**dadurch gekennzeichnet, dass** der Wagenverbinder in der geschlossenen Position ein spitzes Profil aufweist, um zu ermöglichen, dass ein relativ geringer aerodynamischer Widerstand auf den Wagenverbinder ausgeübt wird, wenn sich der Wagenverbinder an einem Ende des Zuges befindet.

2. Wagenverbinder nach Anspruch 1, wobei der Dachabschnitt dazu konfiguriert ist, in der geschlossenen Position innerhalb des Eisenbahnwagens eingefahren zu sein und in der offenen Position aus dem Inneren des Eisenbahnwagens ausgefahren zu sein, um den Durchgang zu bilden.

3. Wagenverbinder nach Anspruch 1 oder 2, wobei der Boden- und der Dachabschnitt dazu konfiguriert sind, es zu ermöglichen, dass ihre Längslänge entsprechend der Längslänge der Wandabschnitte verändert wird, sodass die Längslänge des Durchgangs verändert werden kann.

4. Wagenverbinder nach einem der vorhergehenden Ansprüche, wobei jeder Wandabschnitt mindestens einen ersten Bereich (28) umfasst, der verschieblich an einem zweiten Bereich (30) montiert ist, sodass sich ein Bereich relativ zu dem anderen verschieben kann, um es zu ermöglichen, dass die Längslänge des Wandabschnitts verändert wird.

5. Wagenverbinder nach Anspruch 4, wobei die Bereiche so konfiguriert sind, dass die Verschiebungsbewegung in einer Längsrichtung der Wandabschnitte eingeschränkt ist.

6. Wagenverbinder nach einem der vorhergehenden Ansprüche, wobei eine Bewegung des Wagenverbinders zwischen der offenen und der geschlossenen Position durch eine Betätigungseinrichtung gesteuert wird.

7. Wagenverbinder nach Anspruch 6, wobei die montierbare Schnittstelle ein Drehpunkt ist und die Abschnitte, und somit der Durchgang, in der offenen Position so ausgelegt sind, dass sie sich um die montierbare Schnittstelle in einer Ebene drehen, die parallel zu dem Bodenabschnitt ist.

8. Wagenverbinder nach Anspruch 6 oder 7, wobei jeder Abschnitt ein montierbares Ende (14a), das einen Teil der montierbaren Schnittstelle bildet, und ein distales Ende (16a) aufweist, das einen Teil der verbindbaren Schnittstelle bildet.

9. Wagenverbinder nach Anspruch 8, wobei sich die Wandabschnitte von einer ersten Position, die im Allgemeinen parallel zu einer axialen Richtung eines Eisenbahnwagens ist, in eine zweite Position, die im Allgemeinen senkrecht zu einer axialen Richtung eines Eisenbahnwagens ist, drehen können, sodass distale Enden der Wandabschnitte in der ersten Position im Allgemeinen die Öffnung an der montierbaren Schnittstelle bündig schließen, und in der zweiten Position einen Teil des Durchgangs bilden, und
wobei die Wandabschnitte zwischen der ersten und der zweiten Position beweglich sind.

10. Wagenverbinder nach Anspruch 9, wobei der Boden- und der Dachabschnitt dazu konfiguriert sind, die Wandabschnitte während der Bewegung zwischen der ersten und der zweiten Position nicht zu behindern.

11. Wagenverbinder nach Anspruch 9 oder 10, wobei die Betätigungseinrichtung so ausgelegt ist, dass sie eine Bewegung der Wandabschnitte zwischen der ersten und der zweiten Position steuert und/oder synchronisiert und somit eine Bewegung des Wagenverbinders zwischen der geschlossenen beziehungsweise der offenen Position steuert.

12. Wagenverbinder nach Anspruch 11, wobei jeder Wandabschnitt eine dem Durchgang zugewandte Innenfläche und eine gegenüberliegende Außenfläche aufweist und ferner einen ebenen Außenabschnitt (22) umfasst, der ein montierbares Ende (14c), das einen Teil der montierbaren Schnittstelle bildet, und ein distales Ende (16c) aufweist, das über ein Scharnierelement (24) mit der Außenfläche des Wandabschnitts verbunden ist, sodass in dem Raum zwischen dem Wandabschnitt, dem Außenabschnitt und dem Scharnierelement ein erster Hohlraum (36) definiert ist; und
wobei der Außenabschnitt so ausgelegt ist, dass er sich um die montierbare Schnittstelle in der gleichen Ebene wie der Wandabschnitt dreht.

13. Wagenverbinder nach Anspruch 12, wobei ein erster Winkel (A), der zwischen dem Außenabschnitt und dem Scharnierelement definiert ist, und ein zweiter Winkel (B), der zwischen dem Wandabschnitt und dem Scharnierelement definiert ist, so ausgelegt sind, dass sie über eine Kupplungseinrichtung gemeinsam gesteuert werden.

14. Wagenverbinder nach Anspruch 13, wobei die Kupplungseinrichtung die Bewegung des Wandabschnitts und des Außenabschnitts so kuppelt, dass der erste und der zweite Winkel gemeinsam gesteuert werden können.

15. Wagenverbinder nach einem der Ansprüche 12-14, wobei der Luftdruck des ersten Hohlraums so ausgelegt ist, dass er verändert wird, um es zu ermöglichen, dass die Steifigkeit des Wandabschnitts, des Außenabschnitts und des Scharnierelements verändert werden.

16. Wagenverbinder nach einem der Ansprüche 12-15, wobei das distale Ende des Wandabschnitts eine verbindbare Struktur (39) auf der Außenfläche umfasst, die einen weiteren Hohlraum (40) aufweist, der einen Teil der verbindbaren Schnittstelle bildet, und der Luftdruck des weiteren Hohlraums so ausgelegt ist, dass er verändert wird, um es zu ermöglichen, dass die Steifigkeit der verbindbaren Struktur verändert wird.

17. Wagenverbinder nach Anspruch 16, wobei zwischen dem ersten und dem weiteren Hohlraum ein Zwischenhohlraum (38) definiert ist und der Luftdruck des Zwischenhohlraums unverändert ist und dem Umgebungsluftdruck ausgesetzt ist oder der Luftdruck des Zwischenhohlraums so ausgelegt ist, dass er verändert wird.

18. Wagenverbinder nach einem der Ansprüche 14 bis 17, wobei die Kupplungseinrichtung im Gebrauch und in der geschlossenen Position so ausgelegt ist, dass sie den ersten und den zweiten Winkel beibehält, sodass der Wagenverbinder einen im Wesentlichen dreieckigen Querschnitt aufweist, um ein Reduzieren des aerodynamischen Widerstands des Wagenverbinders zu erleichtern.

19. Wagenverbinder nach einem der vorhergehenden Ansprüche, bei dem der Bodenabschnitt so ausgelegt ist, dass er mechanisch mit einer Kupplung des Eisenbahnwagens gekuppelt wird, sodass der Bodenabschnitt der Bewegung der Kupplung folgt, wenn sich der Wagenverbinder in der geschlossenen Position befindet.

20. Erster und zweiter Wagenverbinder (2a, 2b) nach einem der Ansprüche 7-19, wobei die verbindbare Schnittstelle jedes Wagenverbinders so ausgelegt ist, dass sie sich miteinander verbinden, wodurch sich die Durchgänge und somit die Wagenverbinder verbinden, um einen erweiterten Durchgang und somit einen erweiterten Wagenverbinder zu bilden.

21. Erster und zweiter Wagenverbinder nach Anspruch 20, wobei sich die Wandabschnitte, die Dachabschnitte und die Bodenabschnitte jedes Wagenverbinders miteinander verbinden, um ein miteinander verbundenes Dach und einen miteinander verbundenen Boden und eine erste und eine zweite miteinander verbundene Wand zu bilden.

22. Erster und zweiter Wagenverbinder nach Anspruch 21, wobei das Einfahren und Ausfahren der Dach- und der Bodenabschnitte eingeschränkt ist, wenn die Boden- und die Dachabschnitte miteinander verbunden sind.

23. Erster und zweiter Wagenverbinder nach einem der Ansprüche 21 oder 22, wobei der erweiterte Wagenverbinder im Gebrauch die Enden eines ersten und eines zweiten Eisenbahnwagens miteinander verbindet und sich in einer neutralen Anordnung befindet, wenn die Enden der Eisenbahnwagen parallel zueinander sind, und sich in einer Schwenkanordnung befindet, wenn die Enden der Eisenbahnwagen nicht parallel zueinander sind,
wobei während der neutralen Anordnung die Längslänge jedes Wandabschnitts in einer miteinander verbundenen Wand gleich ist; und
wobei während der Schwenkanordnung die Längslänge jedes Wandabschnitts in einer miteinander verbundenen Wand so ausgelegt ist, dass sie in Bezug zueinander entgegengesetzt verändert wird, sodass die Längslänge des erweiterten Durchgangs konstant bleibt.

24. Erster und zweiter Wagenverbinder nach Anspruch 23, wobei die Abschnitte ferner so ausgelegt sind, dass sie sich um die montierbare Schnittstelle in einer Ebene drehen, die senkrecht zu dem Bodenabschnitt ist, sodass Veränderungen der Höhe des ersten und des zweiten Eisenbahnwagens beim Bilden des erweiterten Wagenverbinders ausgeglichen werden können.

## Revendications

1. Connecteur de voiture (2) pour connecter des voitures ferroviaires d'un train les unes aux autres, comprenant :
une paire de parties de paroi (4a, 4b) ;
une partie de plancher (6) ; et
une partie de toit (8),
dans lequel les parties forment un passage (12) avec une première extrémité comportant une ouverture (10) et formant une interface assemblable (70), pour assembler le connecteur de voiture à une voiture ferroviaire, et une extrémité opposée formant une interface connectable (72)
dans lequel les parties de paroi sont configurées pour permettre à leur longueur longitudinale d'être modifiée ;
dans lequel les parties sont agencées pour être rétractées vers l'interface assemblable de telle sorte que les parties de paroi obstruent l'ouverture, définissant une position fermée du connecteur de voiture, et sont agencées pour être déployées à partir de l'interface assemblable pour former le passage, définissant une position ouverte du connecteur de voiture ;
dans lequel le connecteur de voiture est mobile entre les positions ouverte et fermée ; et
**caractérisé en ce que**, dans la position fermée, le connecteur de voiture présente un profil pointu pour permettre l'induction d'une traînée aérodynamique relativement faible sur le connecteur de voiture lorsque le connecteur de voiture se trouve à une extrémité du train.

2. Connecteur de voiture selon la revendication 1, dans lequel la partie de toit est configurée pour être, dans la position fermée, rétractée à l'intérieur de la voiture ferroviaire, et dans la position ouverte, déployée depuis l'intérieur de la voiture ferroviaire pour former le passage.

3. Connecteur de voiture selon la revendication 1 ou 2, dans lequel les parties de plancher et de toit sont configurées pour permettre à leur longueur longitudinale d'être modifiée en fonction de la longueur longitudinale des parties de paroi de telle sorte que la longueur longitudinale du passage puisse être modifiée.

4. Connecteur de voiture selon l'une quelconque des revendications précédentes, dans lequel chaque partie de paroi comprend au moins une première section (28) assemblée de manière coulissante à une seconde section (30) de telle sorte qu'une section puisse coulisser par rapport à l'autre pour permettre de faire varier la longueur longitudinale de la partie de paroi.

5. Connecteur de voiture selon la revendication 4, dans lequel les sections sont configurées de telle sorte que le mouvement de coulissement soit limité dans une direction longitudinale des parties de paroi.

6. Connecteur de voiture selon l'une quelconque des revendications précédentes, dans lequel le mouvement du connecteur de voiture entre les positions ouverte et fermée est commandé par un moyen d'actionnement.

7. Connecteur de voiture selon la revendication 6, dans lequel l'interface assemblable est un pivot et, dans la position ouverte, les parties, et donc le passage, sont agencées pour pivoter autour de l'interface assemblable dans un plan qui est parallèle à la partie de plancher.

8. Connecteur de voiture selon la revendication 6 ou 7, dans lequel chaque partie comporte une extrémité assemblable (14a), qui fait partie de l'interface assemblable, et une extrémité distale (16a), qui fait partie de l'interface connectable.

9. Connecteur de voiture selon la revendication 8, dans lequel les parties de paroi peuvent pivoter depuis une première position, globalement parallèle à une direction axiale d'une voiture ferroviaire, vers une seconde position, globalement perpendiculaire à une direction axiale d'une voiture ferroviaire, de telle sorte que les extrémités distales des parties de paroi, dans la première position, ferment de manière globalement affleurante l'ouverture au niveau de l'interface assemblable, et dans la seconde position, fassent partie du passage ; et
dans lequel les parties de paroi sont mobiles entre les première et seconde positions.

10. Connecteur de voiture selon la revendication 9, dans lequel les parties de plancher et de toit sont configurées pour ne pas obstruer les parties de paroi pendant le mouvement entre les première et seconde positions.

11. Connecteur de voiture selon la revendication 9 ou 10, dans lequel le moyen d'actionnement est agencé pour commander et/ou synchroniser le mouvement des parties de paroi entre les première et seconde positions, et commande ainsi le mouvement du connecteur de voiture entre les positions fermée et ouverte respectivement.

12. Connecteur de voiture selon la revendication 11, dans lequel chaque partie de paroi comporte une face interne, tournée vers le passage, et une face externe opposée, et comprend en outre une partie externe plane (22) comportant une extrémité assemblable (14c), faisant partie de l'interface assemblable, et une extrémité distale (16c) qui est connectée à la face externe de la partie de paroi par l'intermédiaire d'un élément d'articulation (24) de telle sorte qu'un premier vide (36) soit défini dans l'espace entre la partie de paroi, la partie externe et l'élément d'articulation ; et
dans lequel la partie externe est agencée pour pivoter autour de l'interface assemblable dans le même plan que la partie de paroi.

13. Connecteur de voiture selon la revendication 12, dans lequel un premier angle (A), défini entre la partie externe et l'élément d'articulation, et un second angle (B), défini entre la partie de paroi et l'élément d'articulation, sont agencés pour être commandés en tandem par l'intermédiaire d'un moyen de couplage.

14. Connecteur de voiture selon la revendication 13, dans lequel le moyen de couplage couple le mouvement de la partie de paroi et de la partie externe de telle sorte que les premier et second angles puissent être commandés en tandem.

15. Connecteur de voiture selon l'une quelconque des revendications 12 à 14, dans lequel la pression d'air du premier vide est conçue pour être modifiée afin de permettre de modifier la rigidité de la partie de paroi, de la partie externe et de l'élément d'articulation.

16. Connecteur de voiture selon l'une quelconque des revendications 12 à 15, dans lequel l'extrémité distale de la partie de paroi comprend une structure connectable (39) sur la face externe, comportant un autre vide (40), qui fait partie de l'interface connectable, et la pression d'air de l'autre vide est conçue pour être modifiée afin de permettre de modifier la rigidité de la structure connectable.

17. Connecteur de voiture selon la revendication 16, dans lequel un vide intermédiaire (38) est défini entre le premier et l'autre vides, et la pression d'air du vide intermédiaire reste inchangée et est exposée à la pression d'air ambiante, ou la pression d'air du vide intermédiaire est conçue pour être modifiée.

18. Connecteur de voiture selon l'une quelconque des revendications 14 à 17, dans lequel, lors de l'utilisation et dans la position fermée, le moyen de couplage est conçu pour maintenir le premier et le second angle de telle sorte que le connecteur de voiture ait une section transversale sensiblement triangulaire pour faciliter la réduction de la traînée aérodynamique du connecteur de voiture.

19. Connecteur de voiture selon l'une quelconque des revendications précédentes, dans lequel la partie de plancher est conçue pour être couplée mécaniquement à un attelage de la voiture ferroviaire de telle sorte que la partie de plancher suive le mouvement de l'attelage lorsque le connecteur de voiture est dans la position fermée.

20. Premier et second connecteurs de voiture (2a, 2b) selon l'une quelconque des revendications 7 à 19, dans lesquels l'interface connectable de chaque connecteur de voiture est conçue pour se connecter à l'autre en connectant les passages, et donc les connecteurs de voiture, pour former un passage déployé, et donc un connecteur de voiture déployé.

21. Premier et second connecteurs de voiture selon la revendication 20, dans lesquels les parties de paroi, les parties de toit et les parties de plancher de chaque connecteur de voiture se connectent les unes aux autres pour former un toit et un plancher interconnectés, et une première et une seconde paroi interconnectées.

22. Premier et second connecteurs de voiture selon la revendication 21, dans lesquels la rétraction et le déploiement des parties de toit et de plancher sont limités lorsque les parties de plancher et de toit sont interconnectées.

23. Premier et second connecteurs de voiture selon l'une quelconque des revendications 21 ou 22, dans lesquels, lors de l'utilisation, le connecteur de voiture déployé connecte les extrémités d'une première et d'une seconde voitures ferroviaires ensemble et est dans un agencement neutre lorsque les extrémités des voitures ferroviaires sont parallèles l'une par rapport à l'autre, et dans un agencement pivotant lorsque les extrémités des voitures ferroviaires ne sont pas parallèles l'une par rapport à l'autre,
dans lesquels, pendant l'agencement neutre, la longueur longitudinale de chaque partie de paroi, dans une paroi interconnectée, est la même ; et
dans lesquels, pendant l'agencement pivotant, la longueur longitudinale de chaque partie de paroi, dans une paroi interconnectée, est agencée pour être modifiée en inversement l'une par rapport à l'autre, de telle sorte que la longueur longitudinale du passage déployé reste constante.

24. Premier et second connecteurs selon la revendication 23, dans lesquels les parties sont en outre agencées pour pivoter autour de l'interface assemblable dans un plan qui est perpendiculaire à la partie de plancher de telle sorte que des variations de hauteur des première et seconde voitures ferroviaires puissent être acceptées lors de la formation du connecteur de voiture déployé.
